# EUROPÄISCHE PATENTSCHRIFT

(11) **EP 4 242 144 B1**
(45) Veröffentlichungstag und Bekanntmachung des Hinweises auf die Patenterteilung: **29.01.2025**
(21) Anmeldenummer: 23159372.4
(22) Anmeldetag: 01.03.2023
(51) Int. Cl.: B65G 47/91, B25J 15/06, B25J 13/08, B65G 43/08

(54) **MASCHINELLE HANDHABUNGSVORRICHTUNG UND VERFAHREN ZUM HANDHABEN EINES ELEKTRISCH LEITFÄHIGEN BLECHWERKSTÜCKS SOWIE MASCHINELLE ANORDNUNG FÜR DIE BLECHBEARBEITUNG**
MACHINE HANDLING DEVICE AND METHOD FOR HANDLING AN ELECTRICALLY CONDUCTIVE SHEET METAL WORKPIECE AND MACHINE ASSEMBLY FOR PROCESSING SHEET METAL
DISPOSITIF DE MANIPULATION MÉCANIQUE ET PROCÉDÉ DE MANIPULATION D'UNE PIÈCE DE TÔLE ÉLECTROCONDUCTRICE AINSI QU'AGENCEMENT MÉCANIQUE POUR L'USINAGE DE TÔLE

(30) Priorität: 07.03.2022 DE 102022105284
(43) Veröffentlichungstag der Anmeldung: 13.09.2023
(73) Patentinhaber: TRUMPF Werkzeugmaschinen SE + Co. KG, 71254 Ditzingen (DE)
(72) Erfinder: MATHIAS, Harald, 74357 Bönnigheim (DE); RAICHLE, Florian, 71522 Backnang (DE); KÖPP, Frederick, 70825 Münchingen (DE); FÖRSTER, Stefan, 02681 Wilthen (DE); JACOB, Hagen, 02681 Crostau (DE)
(74) Vertreter: Kohler Schmid Möbus Patentanwälte

(56) Entgegenhaltungen:
- EP-A1- 3 375 576
- EP-B1- 2 616 373
- DE-A1- 102008 015 948
- DE-A1- 102019 115 559
- DE-B3- 102017 205 095

## Beschreibung

Die Erfindung betrifft eine maschinelle Handhabungsvorrichtung zum Handhaben eines elektrisch leitfähigen Blechwerkstücks,
- mit einer Halteeinheit mit Halteelementen, die mit blechwerkstückseitigen Halteelement-Enden an ein Blechwerkstück anlegbar sind, wobei die blechwerkstückseitigen Halteelement-Enden eine Halteelementebene der Halteeinheit definieren,
- mit einer Bewegungseinheit zur Bewegung der Halteeinheit sowie
- mit einer Kontrollvorrichtung, die zwei an der Halteeinheit vorgesehene, parallel zu der Halteelementebene der Halteeinheit gegeneinander versetzte und elektrisch leitfähige Tastelemente sowie eine Kontroll-Auswertevorrichtung umfasst,
   - wobei die Tastelemente der Kontrollvorrichtung ein Tastelementpaar ausbilden und Tastelement-Enden aufweisen, die bei einer Kontroll-Taststellung der Tastelemente des Tastelementpaars in der Halteelementebene der Halteeinheit liegen,
   - wobei die Kontroll-Auswertevorrichtung der Kontrollvorrichtung eine Kontroll-Spannungsquelle, eine Kontroll-Messeinheit sowie eine Kontroll-Vergleichseinheit aufweist,
   - wobei mittels der Kontroll-Spannungsquelle der Kontroll-Auswertevorrichtung bei in der Kontroll-Taststellung angeordneten Tastelementen des Tastelementpaars eine Kontrollspannung an die Tastelemente des Tastelementpaars anlegbar ist,
   - wobei mittels der Kontroll-Messeinheit der Kontroll-Auswertevorrichtung bei an die Tastelemente des Tastelementpaars angelegter Kontrollspannung ein Ist-Wert eines aufgrund der Kontrollspannung zwischen den Tastelementen des Tastelementpaars fließenden elektrischen Stroms oder einer davon abhängigen elektrischen Größe messbar ist und
   - wobei mittels der Kontroll-Vergleichseinheit der Kontroll-Auswertevorrichtung der gemessene Ist-Wert mit einem Referenzwert vergleichbar ist.

Die Erfindung betrifft außerdem eine maschinelle Anordnung für die Blechbearbeitung mit einer maschinellen Handhabungsvorrichtung der vorgenannten Art sowie ein mittels der vorgenannten maschinellen Handhabungsvorrichtung durchführbares Verfahren zum Handhaben eines elektrisch leitfähigen Blechwerkstücks.

Eine gattungsgemäße maschinelle Handhabungsvorrichtung zur Realisierung des gattungsgemäßen Handhabungsverfahrens wird von der Firma TRUMPF, Johann-Maus-Straße 2, 71254 Ditzingen, Deutschland als Automatisierungskomponente von Laserschneidanlagen des Typs "TruLaser Center 7030" angeboten.

Die vorbekannte Handhabungsvorrichtung kommt im Rahmen eines Prozesses der Blechfertigung zum Einsatz, im Laufe dessen durch trennende Bearbeitung eines auf einer Werkstückauflage gelagerten Blechs ein Blechwerkstück und ein das Blechwerkstück umgebendes Restgitter erzeugt werden. Als Halteeinheit ist im Falle des Standes der Technik ein Saugerrahmen mit Halteelementen in Form von Sauggreifern vorgesehen. Neben und zwischen den Sauggreifern sind an dem Saugerrahmen als Tastelemente elektrisch leitfähige Taststifte einer Kontrollvorrichtung angeordnet.

Nach Abschluss des Trennvorgangs wird eine Hubvorrichtung an der Unterseite des erzeugten Blechwerkstücks betätigt, um das Blechwerkstück aus dem Restgitter auszuheben. Nach der Betätigung der Hubvorrichtung wird der Saugerrahmen in eine Übernahmeposition bewegt, in welcher der Saugerrahmen mit den freien Enden der Sauggreifer und der Taststifte mit der von der Werkstückauflage abliegenden Oberseite des Blechwerkstücks in Kontakt ist. Anschließend wird an einander zugeordnete Taststifte eine Spannung angelegt. Fließt nun zwischen den Taststiften und der Maschinenmasse ein elektrischer Strom, so indiziert dies, dass das Blechwerkstück noch mit dem Restgitter verbunden und damit noch nicht zum Abtransport bereit ist.

Im Falle einer vollständigen Trennung des Blechwerkstücks von dem Restgitter werden die an dem Blechwerkstück anliegenden Sauggreifer des Saugerrahmens auf eine Unterdruckquelle aufgeschaltet und der Saugerrahmen wird mittels der Bewegungseinheit der Handhabungsvorrichtung aus der Übernahmeposition in eine Zielposition bewegt. Nachdem der Saugerrahmen die Übernahmeposition verlassen hat, wird an die einander zugeordneten Taststifte erneut eine Spannung angelegt. Da ein an dem Saugerrahmen festgelegtes Blechwerkstück durch die aktivierten Sauggreifer gegen die freien Enden der Taststifte gezogen wird, indiziert ein nach dem neuerlichen Anlegen einer Spannung zwischen den Taststiften fließender Strom, dass an dem Saugerrahmen tatsächlich ein Blech festgelegt ist und somit der Abtransport des Blechwerkstücks störungsfrei verläuft.

Weiterer Stand der Technik ist offenbart in DE 102017205095 B3, die den Oberbegriff von Anspruch 1 offenbart, in EP 2 616 373 B1 und in EP 3 375 576 A1.

EP 2 616 373 B1 offenbart eine Sauggreiferanordnung mit Saugern, die werkstückseitig eine umlaufende Dichtlippe aufweisen. Durch Messung des elektrischen Widerstands der Dichtlippe wird deren Verschleißzustand ermittelt.

EP 3 375 576 A1 betrifft ein Verfahren und eine Vorrichtung zur Zustandskontrolle von Vakuumsaugern einer Greifvorrichtung zur Handhabung von Werkstücken. Mittels einer Prüfeinrichtung wird geprüft, ob Saugermanschetten der Vakuumsauger für eine dichte Anlage an einem zu handhabenden Werkstück ausgebildet sind.

Die Aufgabe der vorliegenden Erfindung besteht ausgehend von dem gattungsgemäßen Stand der Technik darin, eine funktionssichere Überprüfung des Prozessablaufs beim Handhaben von Blechwerkstücken dauerhaft zu gewährleisten. Erfindungsgemäß gelöst wird diese Aufgabe durch die maschinelle Handhabungsvorrichtung gemäß Patentanspruch 1, durch die maschinelle Anordnung gemäß Patentanspruch 14 und durch das Verfahren gemäß Patentanspruch 15.

Die erfindungsgemäße Handhabungsvorrichtung umfasst eine Prüfstation, zu welcher die Halteeinheit mittels der Bewegungseinheit der Handhabungsvorrichtung bewegt wird und an welcher die Funktionsfähigkeit der Kontrollvorrichtung der Handhabungsvorrichtung überprüft wird. Die Überprüfung der Kontrollvorrichtung erfolgt vorzugsweise hauptzeitparallel, so dass sich der Fertigungsprozess an der erfindungsgemäßen maschinellen Anordnung durch die Überprüfung der Kontrollvorrichtung nicht verzögert. Die Position der Prüfstation an der erfindungsgemäßen maschinellen Anordnung ist grundsätzlich frei wählbar. Bevorzugt wird eine Position, an welcher die Überprüfung der Kontrollvorrichtung die übrigen Abläufe an der erfindungsgemäßen maschinellen Anordnung nicht behindert. Als Position für die Prüfstation in Frage kommt beispielsweise eine Position nahe einer Rohblechpalette, von der aus zu bearbeitende Bleche der Fertigungseinheit der erfindungsgemäßen maschinellen Anordnung mittels der erfindungsgemäßen Handhabungsvorrichtung zugeführt werden.

Die an der Prüfstation angeordnete Prüfvorrichtung weist für jedes der Tastelemente des Tastelementpaars der Kontrollvorrichtung einen Prüf-Kontaktkörper auf. Zur Prüfung der Funktionsfähigkeit der Kontrollvorrichtung der erfindungsgemäßen Handhabungsvorrichtung werden die Tastelemente des Tastelementpaars in einer Prüf-Taststellung gegenüber dem Prüf-Kontaktkörper angeordnet, ehe mittels einer Prüf-Auswertevorrichtung der Prüfvorrichtung an das in der Prüf-Taststellung angeordnete Tastelement und den Prüf-Kontaktkörper eine Prüfspannung angelegt wird. Nach Anlegen der Prüfspannung wird mittels einer Prüf-Messeinheit der Prüf-Auswertevorrichtung ein Ist-Wert einer kontaktabhängigen elektrischen Größe gemessen, deren Wert von dem Zustand eines elektrisch leitenden Kontakts zwischen dem in der Prüf-Taststellung angeordneten Tastelement und dem Prüf-Kontaktkörper abhängt. Der gemessene Ist-Wert wird schließlich mittels einer Prüf-Vergleichseinheit der Prüf-Auswertevorrichtung mit einem Referenzwert der kontaktabhängigen elektrischen Größe verglichen, der seinerseits das Bestehen eines elektrisch leitenden Kontakts zwischen dem in der Prüf-Taststellung angeordneten Tastelement und dem Prüf-Kontaktkörper indiziert. Vorzugsweise wird als Prüf-Auswertevorrichtung wenigstens teilweise die Kontroll-Auswertevorrichtung genutzt.

Weicht der mittels der Prüfvorrichtung gemessene Ist-Wert der kontaktabhängigen elektrischen Größe entsprechend deutlich von dem zugeordneten Referenzwert ab, so weist dies auf eine eingeschränkte oder sogar auf eine gänzlich fehlende elektrische Leitfähigkeit und somit auf eine eingeschränkte oder gänzlich fehlende Funktionsfähigkeit des geprüften Tastelements und damit der gesamten Kontrollvorrichtung hin. Grund für eine eingeschränkte oder gänzlich fehlende Funktionsfähigkeit kann insbesondere betriebsbedingter Verschleiß an dem geprüften Tastelement sein. Sowohl die bei der Funktionsprüfung der Tastelemente herangezogenen Referenzwerte als auch die zulässige Abweichung der gemessenen Ist-Werte der kontaktabhängigen elektrischen Größe von den zugeordneten Referenzwerten können empirisch festgelegt werden.

Als kontaktabhängige elektrische Größe misst die Prüf-Messeinheit der Prüf-Auswertevorrichtung vorzugsweise einen elektrischen Strom und/oder einen elektrischen Widerstand (Patentanspruch 9).

Die geprüften Tastelemente sind insbesondere Bauteile einer Kontrollvorrichtung, mittels derer die mit den Tastelementen versehene Halteeinheit daraufhin geprüft wird, ob ein Blechwerkstück mittels der in den Funktionszustand geschalteten Halteelemente an der Halteeinheit festgelegt ist (Patentanspruch 7). Ergänzend oder alternativ kann mittels der Kontrollvorrichtung der erfindungsgemäßen Handhabungsvorrichtung beispielsweise auch wie im Falle des eingangs gewürdigten Standes der Technik der Erfolg eines Trennprozesses geprüft werden.

Erfindungsgemäß besteht die Möglichkeit, die Tastelemente eines Tastelementpaars nacheinander auf ihre Funktionsfähigkeit zu prüfen. In diesem Fall ist ein einzelner Prüf-Kontaktkörper ausreichend, gegenüber dem zunächst das eine und danach das andere Tastelement des Tastelementpaars in der Prüf-Taststellung angeordnet wird.

In bevorzugter Weiterbildung der Erfindung ist zur zeitlichen Verkürzung des Prüfvorgangs eine gleichzeitige Prüfung der Funktionsfähigkeit der beiden Tastelemente eines Tastelementpaars realisiert. Zu diesem Zweck ist jedem der Tastelemente ein eigener Prüf-Kontaktkörper zugeordnet und die den verschiedenen Tastelementen zugeordneten Prüf-Kontaktkörper sind elektrisch gegeneinander isoliert (Patentanspruch 2).

In weiterer Ausgestaltung der Erfindung ist jedes der Tastelemente des Tastelementpaars der Kontrollvorrichtung ein Tastelement einer Tastelementanordnung mit einer Mehrzahl von parallel geschalteten Tastelementen (Patentansprüche 3, 4). Die Tastelementanordnungen können nacheinander an ein und demselben Prüf-Kontaktkörper (Patentanspruch 3) oder gleichzeitig an jeweils einem zugeordneten Prüf-Kontaktkörper (Patentanspruch 4) auf ihre Funktionsfähigkeit geprüft werden.

Die Erfindungsbauart nach Patentanspruch 5 zeichnet sich dadurch aus, dass bei der sukzessiven oder bei der gleichzeitigen Prüfung nicht jeweils die Funktionsfähigkeit der Tastelementanordnung(en) insgesamt sondern vielmehr die Funktionsfähigkeit einzelner Tastelemente geprüft werden kann. Auf diese Weise lassen sich gegebenenfalls exakt diejenigen Tastelemente identifizieren, die aufgrund einer eingeschränkten oder gänzlich fehlenden Funktionsfähigkeit gegen funktionsfähige Tastelemente auszutauschen sind. Jedem der Tastelemente der Kontrollvorrichtung ist eine Prüf-Kontaktkörpereinheit des Prüf-Kontaktkörpers der Prüfvorrichtung zugeordnet. An die Tastelemente und die jeweils zugeordnete Prüf-Kontaktkörpereinheit wird die Prüfspannung einzeln angelegt.

Ausweislich Patentanspruch 6 wird in Weiterbildung der Erfindung die Prüfspannung an das oder die Tastelemente und/oder die Tastelementanordnung(en) und den oder die Prüf-Kontaktkörper oder die Prüf-Kontaktkörpereinheiten der Einfachheit halber angelegt, indem der oder die Prüf-Kontaktkörper oder die Prüf-Kontaktkörpereinheiten mit der Masse verbunden werden. Das Potential an dem oder den Tastelementen und/oder an der oder den Tastelementanordnungen wird mittels der Prüf-Auswertevorrichtung generiert, die zu diesem Zweck vorzugsweise die Kontroll-Spannungsquelle der Kontrollvorrichtung nutzt.

In weiterer bevorzugter Ausgestaltung werden die Tastelemente mittels der Bewegungseinheit der Handhabungsvorrichtung in der Prüf-Taststellung angeordnet, das heißt an den zugeordneten Prüf-Kontaktkörper oder die zugeordnete Prüf-Kontaktkörpereinheit angelegt (Patentanspruch 8).

Die erfindungsgemäße Handhabungsvorrichtung gemäß Patentanspruch 10 ist für Anwendungen vorgesehen, im Falle derer ein elektrisch leitfähiges Blechwerkstück zu handhaben ist, das an einer der Halteeinheit zugewandten Seite eine elektrisch nichtleitende Folie aufweist. Damit die Tastelemente der Kontrollvorrichtung mit dem Blechwerkstück in Kontakt kommen können, weisen die Tastelemente Tastelementspitzen auf, die in einem regulären Zustand in der Lage sind, die an dem Blechwerkstück vorgesehene Folie zu durchdringen. Der oder die Prüf-Kontaktkörper oder die Prüf-Kontaktkörpereinheiten der Prüfvorrichtung zur Prüfung der Funktionsfähigkeit der Kontrollvorrichtung der Handhabungsvorrichtung sind an der dem Tastelement oder den Tastelementen der Kontrollvorrichtung zugeordneten Seite mit einer elektrisch nichtleitenden Prüffolie versehen, welche die Beschaffenheit, insbesondere die Festigkeit, der Folie an dem Blechwerkstück aufweist. In der Prüf-Taststellung werden die Tastelemente mit ihren freien Enden gegen den zugeordneten Prüf-Kontaktkörper oder die zugeordnete Prüf-Kontaktkörpereinheit beaufschlagt. Tastelemente, die einen regulären Zustand aufweisen, durchdringen aufgrund der Beaufschlagung die Prüffolie mit den Tastelementspitzen und kommen durch die Prüffolie hindurch mit dem zugeordneten Prüf-Kontaktkörper oder mit der zugeordneten Prüf-Kontaktkörpereinheit in unmittelbaren Kontakt. Tastelemente, deren Spitzen nennenswert verschlissen sind und aufgrund derer die Funktionsfähigkeit der Kontrollvorrichtung der Handhabungsvorrichtung folglich zumindest eingeschränkt ist, können in der Prüf-Taststellung die Prüffolie nicht oder nicht hinreichend durchdringen und daher nicht in einen elektrisch hinreichend leitfähigen Kontakt mit dem zugeordneten Prüf-Kontaktkörper oder der zugeordneten Prüf-Kontaktkörpereinheit gelangen. Der Ist-Wert der kontaktabhängigen elektrischen Größe, der nach dem Anlegen einer Prüfspannung gemessen wird, unterscheidet sich dann signifikant von dem zugeordneten Referenzwert und indiziert dadurch den irregulären Zustand des Tastelements oder der Tastelementanordnung.

In Weiterbildung der Handhabungsvorrichtung gemäß Patentanspruch 10 ist erfindungsgemäß vorgesehen, dass der oder die Prüf-Kontaktkörper oder die Prüf-Kontaktkörpereinheiten der Prüfvorrichtung bei aufeinanderfolgenden Prüfungen der Funktionsfähigkeit der Kontrollvorrichtung der Handhabungsvorrichtung an der dem Tastelement oder den Tastelementen der Kontrollvorrichtung zugeordneten Seite mit ein und derselben Prüffolie versehen sind und dass das Tastelement oder die Tastelemente in der Prüf-Taststellung bei einer auf eine vorausgegangene Prüfung folgenden Prüfung an der Prüffolie gegenüber der Position bei der vorausgegangenen Prüfung versetzt sind (Patentanspruch 11). Auf diese Weise wird der Verbrauch an Prüffolie minimiert.

Zur Automatisierung der Abläufe bei der Funktionsprüfung der Tastelemente oder Tastelementanordnungen ist in weiterer Ausgestaltung der Handhabungsvorrichtung gemäß Patentanspruch 10 eine Vorrichtung zum Bedecken des oder der Prüf-Kontaktkörper oder der Prüf-Kontaktkörpereinheiten mit der Prüffolie vorgesehen. Die genannte Vorrichtung weist eine Prüffolien-Erneuerungsvorrichtung auf, mittels derer eine den oder die Prüf-Kontaktkörper oder die Prüf-Kontaktkörpereinheiten bedeckende Prüffolie nach einer Prüfung der Funktionsfähigkeit der Kontrollvorrichtung als gebrauchte Prüffolie von dem oder den Prüf-Kontaktkörpern oder den Prüf-Kontaktkörpereinheiten entfernbar und durch eine neue Prüffolie ersetzbar ist (Patentanspruch 12).

Vorzugsweise wird dabei mittels der Prüffolien-Erneuerungsvorrichtung vor einer Prüfung der Funktionsfähigkeit der Kontrollvorrichtung der Handhabungsvorrichtung eine neue Prüffolie von einer Prüffolien-Vorratsrolle abgewickelt und dem oder den Prüf-Kontaktkörpern oder den Prüf-Kontaktkörpereinheiten zugeführt. Nach einer Prüfung der Funktionsfähigkeit der Kontrollvorrichtung wird die Prüffolien-Erneuerungsvorrichtung genutzt, um die gebrauchte Prüffolie von dem oder den Prüf-Kontaktkörpern oder den Prüf-Kontaktkörpereinheiten abzuführen und durch Abwickeln der neuen Prüffolie von der Prüffolien-Vorratsrolle durch die neue Prüffolie zu ersetzen (Patentanspruch 13).

In bevorzugter Weiterbildung der Erfindung ist ein Versatz des oder der Tastelemente gegenüber der Position bei einer vorausgegangenen Prüfung oder das Ersetzen einer Prüffolie durch eine neue Prüffolie nur dann vorgesehen, wenn bei der vorausgegangenen Prüfung die Funktionsfähigkeit der Tastelemente festgestellt und dementsprechend die Prüffolie durch das oder die Tastelemente beschädigt worden ist.

Nachstehend wird die Erfindung anhand beispielhafter schematischer Darstellungen näher erläutert.

Es zeigen:
- Figur 1: eine maschinelle Anordnung für die Blechbearbeitung mit einer Fertigungseinheit und mit einer maschinellen Handhabungsvorrichtung zum Handhaben von Blechwerkstücken,
- Figur 2: eine Saugerplatte der maschinellen Handhabungsvorrichtung gemäß Figur 1 in der Ansicht auf die Werkstückseite der Saugerplatte,
- Figur 3: eine Prüfstation der maschinellen Handhabungsvorrichtung gemäß Figur 1 mit einer ersten Bauart einer Prüfvorrichtung zur Prüfung der Funktionsfähigkeit einer Kontrollvorrichtung der maschinellen Handhabungsvorrichtung,
- Figur 4: die Prüfstation gemäß Figur 3 mit einer zweiten Bauart einer Prüfvorrichtung zur Prüfung der Funktionsfähigkeit der Kontrollvorrichtung der maschinellen Handhabungsvorrichtung und
- Figur 5: die Prüfstation gemäß Figur 3 mit einer Prüffolien-Erneuerungsvorrichtung

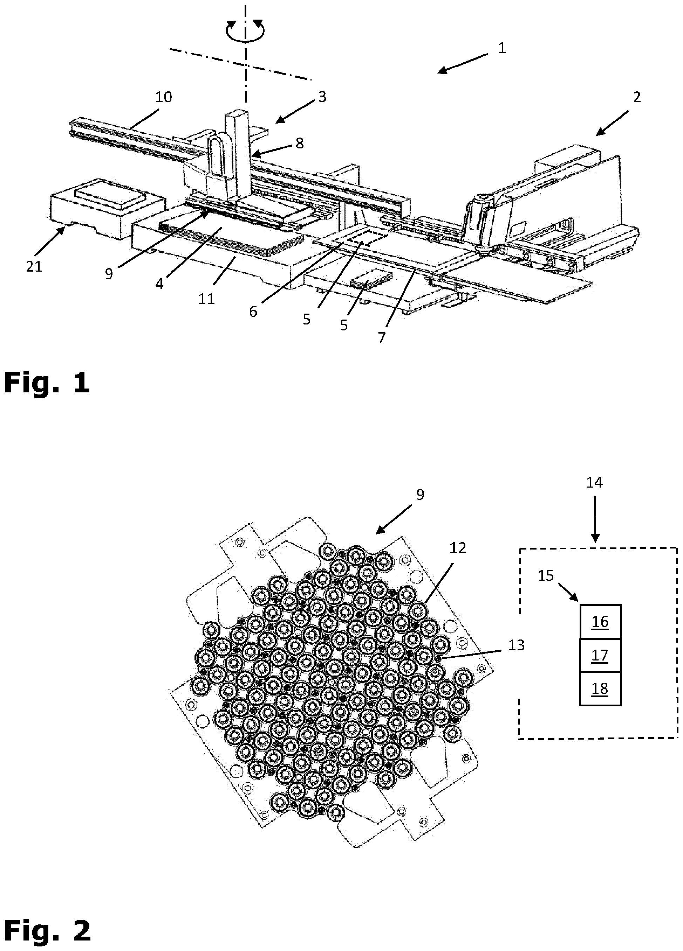

Gemäß Figur 1 umfasst eine maschinelle Anordnung 1 für die Blechbearbeitung eine Fertigungseinheit in Form einer herkömmlichen Stanz-Laser-Kombimaschine 2 sowie eine maschinelle Handhabungsvorrichtung 3 als Automatisierungseinheit für die Stanz-Laser-Kombimaschine 2.

An der Stanz-Laser-Kombimaschine 2 werden im Rahmen eines trennenden Fertigungsprozesses aus einem aus elektrisch leitfähigem Material bestehenden Rohblech 4 Blechwerkstücke 5 und als Bearbeitungsrest ein Restgitter 6 erzeugt.

Die Rohbleche 4 sind ebenso wie die daraus gefertigten Blechwerkstücke 5 und das Restgitter 6 an der Oberseite mit einer herkömmlichen und in Figur 1 nicht im Einzelnen dargestellten Folie aus elektrisch nichtleitendem Material versehen. Mittels der Handhabungsvorrichtung 3 wird eine Werkstückauflage 7 der Stanz-Laser-Kombimaschine 2 be- und entladen.

Zu diesem Zweck ist eine Bewegungseinheit 8 der Handhabungsvorrichtung 3 mit einer Halteeinheit in Form einer Saugerplatte 9 versehen. Die Saugerplatte 9 ist in Figur 2 im Einzelnen und dabei in der Ansicht auf ihre Werkstückseite dargestellt.

Wie in Figur 1 strichpunktiert angedeutet, ist die Saugerplatte 9 an der Bewegungseinheit 8 in bekannter Weise heb- und senkbar und gemeinschaftlich mit der Bewegungseinheit 8 längs einer Führungsschiene 10 der Handhabungsvorrichtung 3 in horizontaler Richtung verfahrbar. Außerdem kann die Saugerplatte 9 um ihre vertikale Bewegungsachse relativ zu der Bewegungseinheit 8 gedreht werden.

Zum Beladen der Werkstückauflage 7 der Stanz-Laser-Kombimaschine 2 nimmt die Handhabungsvorrichtung 3 ein Rohblech 4 von einem auf einer Rohblechpalette 11 abgelegten Rohblechstapel auf. Mit der Saugerplatte 9 und dem daran gehaltenen Rohblech 4 verfährt die Bewegungseinheit 8 aus der Position gemäß Figur 1 längs der Führungsschiene 10 in eine Position oberhalb der Werkstückauflage 7 der Stanz-Laser-Kombimaschine 2. Durch Absenken der Saugerplatte 9 wird das Rohblech 4 dann auf der Werkstückauflage 7 abgelegt.

Zur Fixierung des Rohblechs 4 ist die Saugerplatte 9 mit Halteelementen in Form von herkömmlichen Sauggreifern 12 versehen (Figur 2). Die werkstückseitigen Enden der Sauggreifer 12 liegen in einer gemeinsamen Halteelementebene der Saugerplatte 9.

Zwischen und seitlich neben den Sauggreifern 12 sind an der Saugerplatte 9 als elektrisch leitfähige Taststifte 13 ausgebildete Tastelemente angeordnet. Dabei sind die Taststifte 13 parallel zu der Halteelementebene der Saugerplatte 9 gegeneinander versetzt. Die freien Enden der Taststifte 13 sind als konische Taststiftspitzen ausgebildet, die zu den freien Enden der Taststifte 13 hin spitz zulaufen.

Nach der Übergabe des Rohblechs 4 an die Werkstückauflage 7 der Stanz-Laser-Kombimaschine 2 wird die Saugerplatte 9 mittels der Bewegungseinheit 8 in eine Warteposition seitlich neben der Werkstückauflage 7 bewegt. Es folgt dann die trennende Bearbeitung des auf der Werkstückauflage 7 abgelegten Rohblechs 4 mittels der Bearbeitungseinrichtungen der Stanz-Laser-Kombimaschine 2.

Die durch die trennende Bearbeitung des Rohblechs 4 erzeugten Blechwerkstücke 5 werden mittels der Handhabungsvorrichtung 3 nacheinander von der Werkstückauflage 7 entfernt und auf einem Fertigteilstapel abgelegt.

Zum Aufnehmen eines Blechwerkstücks 5 wird die Saugerplatte 9 mittels der Bewegungseinheit 8 aus der Warteposition neben der Werkstückauflage 7 in eine Position oberhalb des zu entladenden Blechwerkstücks 5 verfahren. Anschließend wird die Saugerplatte 9 zu dem auf der Werkstückauflage 7 gelagerten Blechwerkstück 5 hin abgesenkt, bis die Sauggreifer 12 an der Oberseite des Blechwerkstücks 5 zur Anlage kommen. Dabei sind die Sauggreifer 12 mit ihren blechwerkstückseitigen Enden über die zwischen den Enden der Sauggreifer 12 und dem Blechwerkstück 5 angeordnete Folie an dem Blechwerkstück 5 angelegt. Wird nun in gewohnter Weise ein Unterdruck an die Sauggreifer 12 angelegt, so verkürzen sich die Sauggreifer 12 und die Sauggreifer 12 ziehen bei störungsfreiem Verlauf des Entladevorgangs das Blechwerkstück 5 gegen die freien Enden der an der Saugerplatte 9 vorstehenden Taststifte 13. Die Taststifte 13 befinden sich nun in einer Kontroll-Taststellung an dem Blechwerkstück 5. Sind die freien Enden der Taststifte 13 hinreichend spitz, so durchdringen die Taststiftspitzen die auf das Blechwerkstück 5 aufgebrachte Folie und kommen dadurch in unmittelbaren Kontakt mit dem elektrisch leitfähigen Blechwerkstück 5.

Die Taststifte 13 sind Teil einer Kontrollvorrichtung 14 der Handhabungsvorrichtung 3 (Figur 2). Mit Hilfe der Kontrollvorrichtung 14 wird überprüft, ob ein von der Werkstückauflage 7 der Stanz-Laser-Kombimaschine 2 abzutransportierendes Blechwerkstück 5 mittels der in den Funktionszustand geschalteten Sauggreifer 12 tatsächlich an der Saugerplatte 9 festgelegt ist.

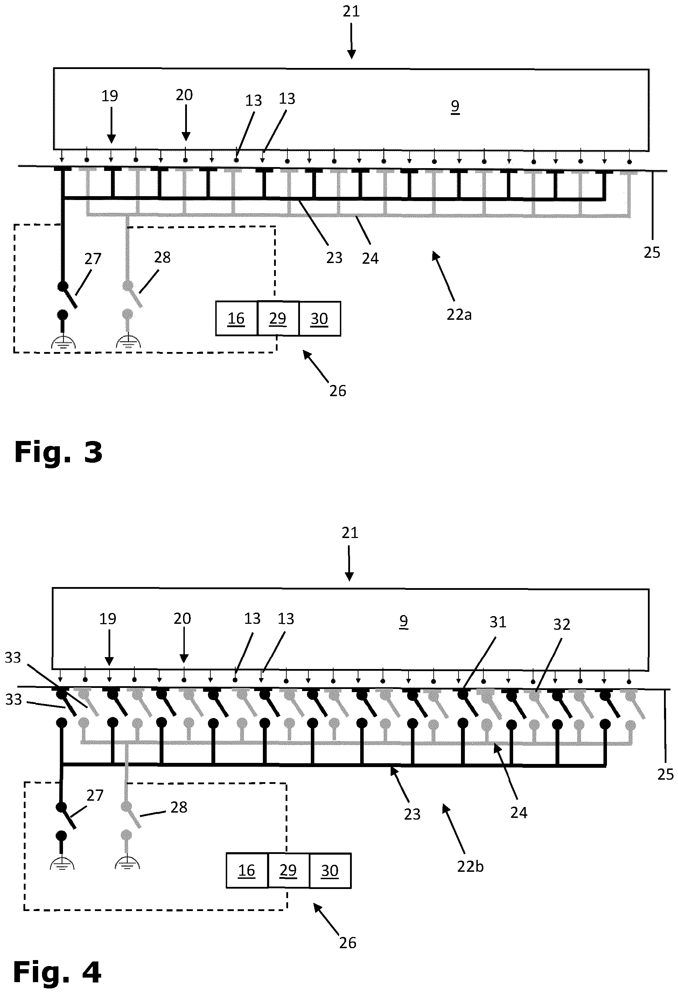

Die Figuren 3 und 4 zeigen die Saugerplatte 9 an einer nachstehend im Einzelnen beschriebenen Prüfstation 21 der Handhabungsvorrichtung 3.

Die Taststifte 13 an der Saugerplatte 9 verteilen sich auf zwei Tastelement- bzw. Taststiftanordnungen 19, 20, wobei die Taststifte 13 jeder der Taststiftanordnungen 19, 20 parallel geschaltet sind. An der Saugerplatte 9 sind die Taststiftanordnungen 19, 20 elektrisch gegeneinander isoliert. Auf diese Weise bilden die Taststiftanordnungen 19, 20 ein Anordnungspaar.

In den Figuren 3 und 4 sind die Taststiftanordnungen 19, 20 stark schematisch dargestellt. Die Taststifte 13 der Taststiftanordnung 19 sind in den Figuren 3 und 4 mit einer Pfeilspitze versehen, während die Taststifte 13 der Taststiftanordnung 20 einen endseitigen Kreis aufweisen. Die an der Saugerplatte 9 ebenfalls vorgesehenen Sauggreifer 12 sind in den Figuren 3 und 4 der Übersichtlichkeit halber nicht dargestellt.

Die Kontrollvorrichtung 14 umfasst zusätzlich zu den Taststiften 13 eine Kontroll-Auswertevorrichtung 15, die ihrerseits eine Kontroll-Spannungsquelle 16, eine Kontroll-Messeinheit 17 sowie eine Kontroll-Vergleichseinheit 18 aufweist (Figur 2).

An der Werkstückauflage 7 der Laser-Stanz-Kombimaschine 2 wird nach dem Anziehen des Blechwerkstücks 5 gegen die Taststiftspitzen der Taststifte 13 an die Taststiftanordnungen 19, 20 mittels der Kontroll-Spannungsquelle 16 der Kontroll-Auswertevorrichtung 15 eine Kontrollspannung angelegt.

Nach dem Anlegen der Kontrollspannung misst die Kontroll-Messeinheit 17 der Kontroll-Auswertevorrichtung 15 den Ist-Wert eines zwischen den Taststiftanordnungen 19, 20 fließenden elektrischen Stroms. In der Kontroll-Vergleichseinheit 18 der Kontroll-Auswertevorrichtung 15 wird der gemessene Ist-Wert des elektrischen Stroms mit einem Referenzwert, hier dem Referenzwert null, verglichen.

Wird als Ist-Wert des elektrischen Stroms ein von null verschiedener Wert gemessen, so indiziert dies bei funktionsfähigen, das heißt hinreichend spitzen Taststiften 13 der Taststiftanordnungen 19, 20, dass an der Saugerplatte 9 ein elektrisch leitfähiges Blechwerkstück 5 fixiert ist und dass dementsprechend das Entladen des Blechwerkstücks 5 von der Werkstückauflage 7 der Stanz-Laser-Kombimaschine 2 störungsfrei verlaufen ist.

Im Betrieb sind insbesondere die Taststiftspitzen der Taststifte 13 Verschleiß unterworfen. Infolgedessen können sich die Taststiftspitzen der Taststifte 13 derart abnutzen, dass die Taststifte 13 nicht mehr in der Lage sind, die Folie an der Oberseite der von der Werkstückauflage 7 zu entladenden Blechwerkstücke 5 zu durchdringen. Mit Taststiften 13, die in ihrer Funktionsfähigkeit derart eingeschränkt sind, ist eine funktionssichere Überprüfung der Saugerplatte 9 auf daran festgelegte Blechwerkstücke 5 nicht möglich.

Zur Gewährleistung einer dauerhaft funktionssicheren Kontrolle der Saugerplatte 9 auf daran festgelegte Blechwerkstücke 5 weist die Handhabungsvorrichtung 3 die in den Figuren 3 und 4 und auch in Figur 1 stark schematisch dargestellte Prüfstation 21 auf. Ausweislich Figur 1 befindet sich die Prüfstation 21 in dem dargestellten Beispielsfall in unmittelbarer Nachbarschaft der Rohblechpalette 11.

An der Prüfstation 21 ist eine Prüfvorrichtung angeordnet, mittels derer die Funktionsfähigkeit der Kontrollvorrichtung 14 der Handhabungsvorrichtung 3 in regelmäßigen Zeitabständen geprüft wird. Eine Prüfvorrichtung 22a erster Bauart ist in Figur 3 dargestellt. Figur 4 zeigt eine Prüfvorrichtung 22b zweiter Bauart.

Gemäß Figur 3 weist die Prüfvorrichtung 22a für die Taststiftanordnung 19 einen elektrisch leitfähigen Prüf-Kontaktkörper 23 und für die Taststiftanordnung 20 einen elektrisch leitfähigen Prüf-Kontaktkörper 24 auf. Jedem der Taststifte 13 der Taststiftanordnung 19 ist ein Flächenbereich des Prüf-Kontaktkörpers 23 und jedem der Taststifte 13 der Taststiftanordnung 20 ein Flächenbereich des Prüf-Kontaktkörpers 24 zugeordnet.

Die Prüf-Kontaktkörper 23, 24 sind elektrisch gegeneinander isoliert. Die zu den Taststiftanordnungen 19, 20 hin weisende Oberseite der Prüf-Kontaktkörper 23, 24 ist von einer Prüffolie 25 bedeckt.

Die Prüffolie 25 stimmt in wesentlichen Beschaffenheitsmerkmalen mit der an der Oberseite des Rohblechs 4 und der Blechwerkstücke 5 anhaftenden Folie überein. Insbesondere besitzt die Prüffolie 25 die gleiche Materialfestigkeit wie die Folie an den Rohblechen 4 und den Blechwerkstücken 5. Außerdem ist auch die Prüffolie 25 elektrisch nichtleitend.

Zur Prüfung der Funktionsfähigkeit der Kontrollvorrichtung 14 der Handhabungsvorrichtung 3 wird die Saugerplatte 9 mittels der Bewegungseinheit 8 zu der Prüfstation 21 verfahren und dort mit den freien Enden der Taststifte 13 der Taststiftanordnungen 19, 20 auf die Oberseite der Prüf-Kontaktkörper 23, 24 abgesenkt. Dadurch gelangen die Taststifte 13 der Taststiftanordnungen 19, 20 in eine Prüf-Taststellung gegenüber den Prüf-Kontaktkörpern 23, 24. In der Prüf-Taststellung werden die Taststifte 13 gegen die Prüf-Kontaktkörper 23, 24 beaufschlagt.

Befinden sich die Taststifte 13 der Taststiftanordnungen 19, 20 in einem funktionsfähigen Zustand, d.h. sind die Taststiftspitzen der Taststifte 13 nicht oder nur unwesentlich verschlissen, so durchdringen die Taststiftspitzen der in der Prüf-Taststellung angeordneten Taststifte 13 die Prüffolie 25 und kommen dadurch in direkten Kontakt mit den Prüf-Kontaktkörpern 23, 24.

Nach der Überführung der Taststifte 13 der Taststiftanordnungen 19, 20 in die Prüf-Taststellung wird mittels einer Prüf-Auswertevorrichtung 26 der Prüfvorrichtung 22a einerseits an die Taststiftanordnung 19 und den dieser zugeordneten Prüf-Kontaktkörper 23 und andererseits an die Taststiftanordnung 20 und den dieser zugeordneten Prüf-Kontaktkörper 24 eine Prüfspannung angelegt.

Zu diesem Zweck sind die Taststiftanordnungen 19, 20 an die nun als Teil der Prüf-Auswertevorrichtung 26 genutzte Kontroll-Spannungsquelle 16 der Kontrollvorrichtung 14 angeschlossen. Die Prüf-Kontaktkörper 23, 24 werden durch Schließen eines Schalters 27 bzw. eines Schalters 28 mit der Masse verbunden.

Bei in der Prüf-Taststellung angeordneten Taststiften 13 der Taststiftanordnungen 19, 20 und bei angelegter Prüfspannung wird nun mittels einer Prüf-Messeinheit 29 der Prüf-Auswertevorrichtung 26 für jede der Taststiftanordnungen 19, 20 gemessen, ob aufgrund der angelegten Prüfspannung ein elektrischer Strom fließt. Der mittels der Prüf-Messeinheit 29 gemessene Ist-Wert des elektrischen Stroms wird in einer Prüf-Vergleichseinheit 30 der Prüf-Auswertevorrichtung 26 für jede der Taststiftanordnungen 19, 20 mit einem Referenzwert verglichen, welcher das Bestehen eines elektrisch leitenden Kontakts zwischen den Taststiften 13 der Taststiftanordnungen 19, 20 und dem jeweils zugeordneten Prüf-Kontaktkörper 23, 24 indiziert. Weicht der gemessene Ist-Wert des elektrischen Stroms von dem Referenzwert nicht oder nur geringfügig ab, so deutet dies darauf hin, dass wenigstens ein Teil der Taststifte 13 der Taststiftanordnung 19 beziehungsweise der Taststiftanordnung 20 funktionsfähig und dementsprechend in der Lage ist, die Prüffolie 25 und somit auch die Folie an den Blechwerkstücken 5 zu durchdringen. Als Prüf-Messeinheit 29 wird vorzugsweise die Kontroll-Messeinheit 17 genutzt, als Prüf-Vergleichseinheit 30 ist vorzugsweise die Kontroll-Vergleichseinheit 18 vorgesehen. Die Prüf-Auswertevorrichtung 26 beziehungsweise die Kontroll-Auswertevorrichtung 15 ist insbesondere in der Saugerplatte 9 zumindest teilweise verbaut.

Die Prüfvorrichtung 22b gemäß Figur 4 unterscheidet sich von der Prüfvorrichtung 22a gemäß Figur 3 dadurch, dass die Taststifte 13 der Taststiftanordnungen 19, 20 an der Prüfvorrichtung 22b einzeln auf ihre Funktionsfähigkeit geprüft werden können. Zu diesem Zweck ist jedem Taststift 13 der Taststiftanordnung 19 eine Prüf-Kontaktkörpereinheit 31 des Prüf-Kontaktkörpers 23 und jedem Taststift 13 der Taststiftanordnung 20 eine Prüf-Kontaktkörpereinheit 32 des Prüf-Kontaktkörpers 24 zugeordnet und die Prüf-Kontaktkörpereinheiten 31, 32 sind elektrisch gegeneinander isoliert. Außerdem muss zur Verbindung jedes der Prüf-Kontaktkörpereinheiten 31, 32 zusätzlich zu dem Schalter 28 oder 29 auch ein Schalter 33 betätigt werden.

Sind die Schalter 27, 28 geschlossen, so kann durch Schließen des der betreffenden Prüf-Kontaktkörpereinheit 31, 32 zugeordneten Schalters 33 die Funktionsfähigkeit des der jeweiligen Prüf-Kontaktkörpereinheit 31, 32 zugeordneten Taststifts 13 geprüft werden. Ist die Spitze des Taststifts 13 nicht oder nicht wesentlich verschlissen, so durchdringt die Taststiftspitze die Prüffolie 25 und unter der Wirkung der an den Taststift 13 und die zugeordnete Prüf-Kontaktkörpereinheit 31 oder 32 angelegten Spannung fließt ein elektrischer Strom, dessen Ist-Wert mittels der Prüf-Messeinheit 29 gemessen und anschließend in der Prüf-Vergleichseinheit 30 mit dem zugehörigen Referenzwert verglichen wird.

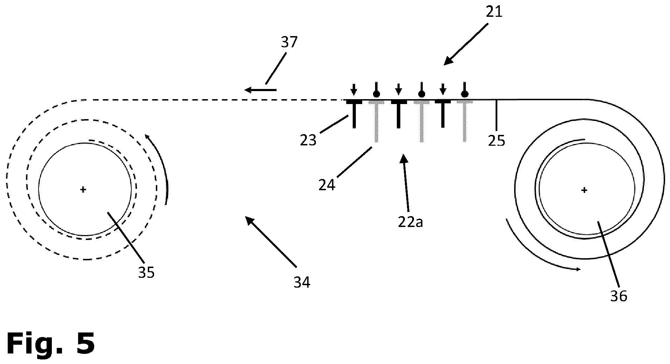

Figur 5 zeigt die Prüfvorrichtung 22a gemäß Figur 3 mit einer in Figur 3 nicht dargestellten Prüffolien-Erneuerungsvorrichtung 34. Vor Beginn einer Prüfung der Funktionsfähigkeit der Kontrollvorrichtung 14 wird mittels der Prüffolien-Erneuerungsvorrichtung 34 über den Prüf-Kontaktkörpern 23, 24 eine diese vollständig bedeckende Prüffolie 25 angeordnet. Nach Abschluss der Prüfung wird die zuvor durch die Taststifte 13 der Tastelementanordnungen 19, 20 beaufschlagte und durch die Taststiftspitzen gegebenenfalls perforierte Prüffolie 25 als gebrauchte Prüffolie 25 von den Prüf-Kontaktkörpern 23, 24 entfernt und durch eine neue Prüffolie 25 ersetzt, welche die Prüf-Kontaktkörper 23, 24 erneut vollständig abdeckt.

Zu diesem Zweck wird mittels einer motorisch angetriebenen Förderrolle 35 der Prüffolien-Erneuerungsvorrichtung 34 eine neue Prüffolie 25 von einer Prüffolien-vorratsrolle 36 abgewickelt und den Prüf-Kontaktkörpern 23, 24 zugeführt.

Zur Minimierung des Verbrauchs an Prüffolie 25 ist es in dem dargestellten Beispielsfall auch möglich, eine die Prüf-Kontaktkörper 23, 24 vollständig bedeckende Prüffolie 25 nach Beendigung einer Prüfung der Funktionsfähigkeit der Kontrollvorrichtung 14 für eine darauffolgende Prüfung nicht vollständig zu ersetzen sondern nur so weit in einer Vorschubrichtung 37 der Prüffolien-Erneuerungsvorrichtung 34 weiter zu takten, bis ein bei der vorausgegangenen Prüfung von den Taststiften 13 nicht beanspruchter Bereich der Prüffolie 25 die Prüf-Kontaktkörpern 23, 24 dort bedeckt, wo die Taststifte 13 bei der nachfolgenden Prüfung der Funktionsfähigkeit der Kontrollvorrichtung 14 angeordnet sind.

## Patentansprüche

1. Maschinelle Handhabungsvorrichtung zum Handhaben eines elektrisch leitfähigen Blechwerkstücks (5),
• mit einer Halteeinheit (9) mit Halteelementen (12), die mit blechwerkstückseitigen Halteelement-Enden an ein Blechwerkstück (5) anlegbar sind, wobei die blechwerkstückseitigen Halteelement-Enden eine Halteelementebene der Halteeinheit (9) definieren,
• mit einer Bewegungseinheit (8) zur Bewegung der Halteeinheit (9) sowie
• mit einer Kontrollvorrichtung (14), die zwei an der Halteeinheit (9) vorgesehene, parallel zu der Halteelementebene der Halteeinheit (9) gegeneinander versetzte und elektrisch leitfähige Tastelemente (13) sowie eine Kontroll-Auswertevorrichtung (15) umfasst,
- wobei die Tastelemente (13) der Kontrollvorrichtung (14) ein Tastelementpaar ausbilden und Tastelement-Enden aufweisen, die bei einer Kontroll-Taststellung der Tastelemente (13) des Tastelementpaars in der Halteelementebene der Halteeinheit (9) liegen,
- wobei die Kontroll-Auswertevorrichtung (15) der Kontrollvorrichtung (14) eine Kontroll-Spannungsquelle (16), eine Kontroll-Messeinheit (17) sowie eine Kontroll-Vergleichseinheit (18) aufweist,
- wobei mittels der Kontroll-Spannungsquelle (16) der Kontroll-Auswertevorrichtung (15) bei in der Kontroll-Taststellung angeordneten Tastelementen (13) des Tastelementpaars eine Kontrollspannung an die Tastelemente (13) des Tastelementpaars anlegbar ist,
- wobei mittels der Kontroll-Messeinheit (17) der Kontroll-Auswertevorrichtung (15) bei an die Tastelemente (13) des Tastelementpaars angelegter Kontrollspannung ein Ist-Wert eines aufgrund der Kontrollspannung zwischen den Tastelementen (13) des Tastelementpaars fließenden elektrischen Stroms oder einer davon abhängigen elektrischen Größe messbar ist und
- wobei mittels der Kontroll-Vergleichseinheit (18) der Kontroll-Auswertevorrichtung (15) der gemessene Ist-Wert mit einem Referenzwert vergleichbar ist,
**dadurch gekennzeichnet, dass**
eine Prüfstation (21) vorgesehen ist, an welcher die Halteeinheit (9) der Handhabungsvorrichtung mittels der Bewegungseinheit (8) der Handhabungsvorrichtung anordenbar ist und an welcher die Funktionsfähigkeit der Kontrollvorrichtung (14) der Handhabungsvorrichtung mittels einer Prüfvorrichtung (22a, 22b) prüfbar ist,
• indem für jedes der Tastelemente (13) des Tastelementpaars der Kontrollvorrichtung ein elektrisch leitfähiger Prüf-Kontaktkörper (23, 24) der Prüfvorrichtung (22a, 22b) vorgesehen ist,
• indem jedes der Tastelemente (13) des Tastelementpaars in einer Prüf-Taststellung gegenüber dem Prüf-Kontaktkörper (23, 24) anordenbar ist,
• indem eine Prüf-Auswertevorrichtung (26) vorgesehen ist, mittels derer an das in der Prüf-Taststellung angeordnete Tastelement (13) und den Prüf-Kontaktkörper (23, 24) eine Prüfspannung anlegbar ist und
• indem die Prüf-Auswertevorrichtung (26) eine Prüf-Messeinheit (29) sowie eine Prüf-Vergleichseinheit (30) aufweist, wobei mittels der Prüf-Messeinheit (29) der Prüf-Auswertevorrichtung (26) bei angelegter Prüfspannung ein Ist-Wert einer kontaktabhängigen elektrischen Größe messbar ist, deren Wert von dem Zustand eines elektrisch leitenden Kontakts zwischen dem in der Prüf-Taststellung angeordneten Tastelement (13) und dem Prüf-Kontaktkörper (23, 24) abhängig ist und wobei mittels der Prüf-Vergleichseinheit (30) der Prüf-Auswertevorrichtung (26) der gemessene Ist-Wert der kontaktabhängigen elektrischen Größe mit einem Referenzwert der kontaktabhängigen elektrischen Größe vergleichbar ist, welcher das Bestehen eines elektrisch leitenden Kontakts zwischen dem in der Prüf-Taststellung angeordneten Tastelement (13) und dem Prüf-Kontaktkörper (23, 24) indiziert.

2. Maschinelle Handhabungsvorrichtung nach Anspruch 1, **dadurch gekennzeichnet,**
• **dass** jedem der Tastelemente (13) des Tastelementpaars der Kontrollvorrichtung (14) ein eigener elektrisch leitfähiger Prüf-Kontaktkörper (23, 24) der Prüfvorrichtung (22a, 22b) zugeordnet ist, der gegen den dem jeweils anderen Tastelement (13) zugeordneten Prüf-Kontaktkörper (23, 24) elektrisch isoliert ist,
• **dass** die Tastelemente (13) des Tastelementpaars gleichzeitig in einer Prüf-Taststellung gegenüber dem jeweils zugeordneten Prüf-Kontaktkörper (23, 24) anordenbar sind,
• **dass** mittels der Prüf-Auswertevorrichtung (26) an die in der Prüf-Taststellung angeordneten Tastelemente (13) und den jeweils zugeordneten Prüf-Kontaktkörper (23, 24) eine Prüfspannung anlegbar ist,
• **dass** mittels der Prüf-Messeinheit (29) der Prüf-Auswertevorrichtung (26) bei angelegter Prüfspannung ein Ist-Wert einer kontaktabhängigen elektrischen Größe messbar ist, deren Wert von dem Zustand eines elektrisch leitenden Kontakts zwischen den in der Prüf-Taststellung angeordneten Tastelementen (13) und dem jeweils zugeordneten Prüf-Kontaktkörper (23, 24) abhängig ist und
• **dass** mittels der Prüf-Vergleichseinheit (30) der Prüf-Auswertevorrichtung (26) der gemessene Ist-Wert der kontaktabhängigen elektrischen Größe mit einem Referenzwert der kontaktabhängigen elektrischen Größe vergleichbar ist, welcher das Bestehen eines elektrisch leitenden Kontakts zwischen den in der Prüf-Taststellung angeordneten Tastelementen (13) und dem jeweils zugeordneten Prüf-Kontaktkörper (23, 24) indiziert.

3. Maschinelle Handhabungsvorrichtung nach Anspruch 1, **dadurch gekennzeichnet,**
• **dass** jedes der Tastelemente (13) des Tastelementpaars der Kontrollvorrichtung (14) ein Tastelement (13) einer Tastelementanordnung (19, 20) mit einer Mehrzahl von parallel geschalteten Tastelementen (13) ist,
• **dass** mittels der Kontroll-Spannungsquelle (16) der Kontroll-Auswertevorrichtung (15) an die Tastelementanordnungen (19, 20) bei in der Kontroll-Taststellung angeordneten Tastelementen (13) eine Kontrollspannung anlegbar ist und
• **dass** an der Prüfstation (21) die Funktionsfähigkeit der Kontrollvorrichtung (14) der Handhabungsvorrichtung mittels der Prüfvorrichtung (22a, 22b) prüfbar ist,
- indem für jede der Tastelementanordnungen (19, 20) der Kontrollvorrichtung (14) ein elektrisch leitfähiger Prüf-Kontaktkörper (23, 24) der Prüfvorrichtung (22a, 22b) vorgesehen ist,
- indem mittels der Prüf-Auswertevorrichtung (26) bei in der Prüf-Taststellung angeordneten Tastelementen (13) an die Tastelementanordnung (19, 20) und den Prüf-Kontaktkörper (23, 24) eine Prüfspannung anlegbar ist,
- indem mittels der Prüf-Messeinheit (29) der Prüf-Auswertevorrichtung (26) bei angelegter Prüfspannung ein Ist-Wert einer kontaktabhängigen elektrischen Größe messbar ist, deren Wert von dem Zustand eines elektrisch leitenden Kontakts zwischen der Tastelementanordnung (19, 20) und dem Prüf-Kontaktkörper (23, 24) abhängig ist und
- indem mittels der Prüf-Vergleichseinheit (30) der Prüf-Auswertevorrichtung (26) der gemessene Ist-Wert der kontaktabhängigen elektrischen Größe mit einem Referenzwert der kontaktabhängigen elektrischen Größe vergleichbar ist, welcher das Bestehen eines elektrisch leitenden Kontakts zwischen der Tastelementanordnung (19, 20) und dem Prüf-Kontaktkörper (23, 24) indiziert.

4. Maschinelle Handhabungsvorrichtung nach Anspruch 3, **dadurch gekennzeichnet,**
• **dass** jeder der Tastelementanordnungen (19, 20) der Kontrollvorrichtung (14) ein eigener elektrisch leitfähiger Prüf-Kontaktkörper (23, 24) der Prüfvorrichtung (22a, 22b) zugeordnet ist, der gegen den der jeweils anderen Tastelementanordnung (19, 20) zugeordneten Prüf-Kontaktkörper (23, 24) elektrisch isoliert ist,
• **dass** wenigstens ein Tastelement (13) der einen Tastelementanordnung (19, 20) gleichzeitig mit wenigstens einem Tastelement (13) der anderen Tastelementanordnung (19, 20) in einer Prüf-Taststellung gegenüber dem jeweils zugeordneten Prüf-Kontaktkörper (23, 24) anordenbar ist,
• **dass** mittels der Prüf-Auswertevorrichtung (26) bei in der Prüf-Taststellung angeordneten Tastelementen (13) an die Tastelementanordnungen (19, 20) und den jeweils zugeordneten Prüf-Kontaktkörper (23, 24) eine Prüfspannung anlegbar ist,
• **dass** mittels der Prüf-Messeinheit (29) der Prüf-Auswertevorrichtung (26) bei angelegter Prüfspannung ein Ist-Wert einer kontaktabhängigen elektrischen Größe messbar ist, deren Wert von dem Zustand eines elektrisch leitenden Kontakts zwischen den Tastelementanordnungen (19, 20) und dem jeweils zugeordneten Prüf-Kontaktkörper (23, 24) abhängig ist und
• **dass** mittels der Prüf-Vergleichseinheit (30) der Prüf-Auswertevorrichtung (26) der gemessene Ist-Wert der kontaktabhängigen elektrischen Größe mit einem Referenzwert der kontaktabhängigen elektrischen Größe vergleichbar ist, welcher das Bestehen eines elektrisch leitenden Kontakts zwischen den Tastelementanordnungen (19, 20) und dem jeweils zugeordneten Prüf-Kontaktkörper (23, 24) indiziert.

5. Maschinelle Handhabungsvorrichtung nach Anspruch 3 oder Anspruch 4, **dadurch gekennzeichnet,**
• **dass** der Prüf-Kontaktkörper (23, 24) oder wenigstens einer der Prüf-Kontaktkörper (23, 24) ausgebildet ist als Prüf-Kontaktkörperanordnung mit elektrisch leitfähigen und elektrisch gegeneinander isolierten Prüf-Kontaktkörpereinheiten (31, 32), von denen jeweils eine Prüf-Kontaktkörpereinheit (31, 32) einem der Tastelemente (13) der Tastelementanordnungen (19, 20) zugeordnet ist,
• **dass** die Tastelemente (13) jeder der Tastelementanordnungen (19, 20) gleichzeitig in einer Prüf-Taststellung gegenüber der jeweils zugeordneten Prüf-Kontaktkörpereinheit (31, 32) anordenbar sind,
• **dass** mittels der Prüf-Auswertevorrichtung (26) an jedes der in der Prüf-Taststellung angeordneten Tastelemente (13) und die zugeordnete Prüf-Kontaktkörpereinheit (31, 32) einzeln eine Prüfspannung anlegbar ist,
• **dass** mittels der Prüf-Messeinheit (29) der Prüf-Auswertevorrichtung (26) bei angelegter Prüfspannung ein Ist-Wert einer kontaktabhängigen elektrischen Größe messbar ist, deren Wert von dem Zustand eines elektrischen leitenden Kontakts zwischen dem Tastelement (13) und der zugeordneten Prüf-Kontaktkörpereinheit (31, 32) abhängig ist und
• **dass** mittels der Prüf-Vergleichseinheit (30) der Prüf-Auswertevorrichtung (26) der gemessene Ist-Wert der kontaktabhängigen elektrischen Größe mit einem Referenzwert der kontaktabhängigen elektrischen Größe vergleichbar ist, welcher das Bestehen eines elektrisch leitenden Kontakts zwischen dem in der Prüf-Taststellung angeordneten Tastelement (13) und der zugeordneten Prüf-Kontaktkörpereinheit (31, 32) indiziert.

6. Maschinelle Handhabungsvorrichtung nach einem der vorhergehenden Ansprüche, **dadurch gekennzeichnet,**
• **dass** eine Prüfspannung an das in der Prüf-Taststellung angeordnete Tastelement (13) und den Prüf-Kontaktkörper (23, 24) anlegbar ist, indem der Prüf-Kontaktkörper (23, 24) mit der Masse verbindbar ist oder
• **dass** eine Prüfspannung an die in der Prüf-Taststellung angeordneten Tastelemente (13) und den jeweils zugeordneten Prüf-Kontaktkörper (23, 24) anlegbar ist, indem der Prüf-Kontaktkörper (23, 24) mit der Masse verbindbar ist oder
• **dass** eine Prüfspannung an die Tastelementanordnung (19, 20) und den Prüf-Kontaktkörper (23, 24) anlegbar ist, indem der Prüf-Kontaktkörper (23, 24) mit der Masse verbindbar ist oder
• **dass** eine Prüfspannung an die Tastelementanordnungen (19, 20) und den jeweils zugeordneten Prüf-Kontaktkörper (23, 24) anlegbar ist, indem der Prüf-Kontaktkörper (23, 24) mit der Masse verbindbar ist oder
• **dass** eine Prüfspannung an jedes der in der Prüf-Taststellung angeordneten Tastelemente (13) und die zugeordnete Prüf-Kontaktkörpereinheit (31, 32) einzeln anlegbar ist, indem die Prüf-Kontaktkörpereinheit (31, 32) mit der Masse verbindbar ist.

7. Maschinelle Handhabungsvorrichtung nach einem der vorhergehenden Ansprüche, **dadurch gekennzeichnet,**
• **dass** die Halteelemente (12) der Halteeinheit (9) gesteuert in einen Funktionszustand schaltbar sind, wobei mittels der in den Funktionszustand geschalteten Halteelemente (12) ein Blechwerkstück (5) an der Halteeinheit (9) mit einer Erstreckung in der Halteelementebene festlegbar ist und
• **dass** mittels der Kontrollvorrichtung (14) der Handhabungsvorrichtung als Zustand der Halteeinheit (9) kontrollierbar ist, ob ein Blechwerkstück (5) mittels der in den Funktionszustand geschalteten Halteelemente (12) an der Halteeinheit (9) festgelegt ist, wobei die Tastelemente (13) des Tastelementpaars bei in den Funktionszustand geschalteten Halteelementen (12) der Halteeinheit (9) in der Kontroll-Taststellung anordenbar sind.

8. Maschinelle Handhabungsvorrichtung nach einem der vorhergehenden Ansprüche, **dadurch gekennzeichnet, dass** die Tastelemente (13) mittels der Bewegungseinheit (8) der Handhabungsvorrichtung in der Prüf-Taststellung anordenbar sind.

9. Maschinelle Handhabungsvorrichtung nach einem der vorhergehenden Ansprüche, **dadurch gekennzeichnet, dass** mittels der Prüf-Messeinheit (29) der Prüf-Auswertevorrichtung (26) als kontaktabhängige elektrische Größe ein elektrischer Strom und/oder ein elektrischer Widerstand messbar ist.

10. Maschinelle Handhabungsvorrichtung nach einem der vorhergehenden Ansprüche, **dadurch gekennzeichnet,**
• **dass** die Handhabungsvorrichtung ausgebildet ist zum Handhaben eines elektrisch leitfähigen Blechwerkstücks (5), das an einer der Halteeinheit (9) zugewandten Seite mit einer elektrisch nichtleitenden Folie versehen ist,
• **dass** die Halteelemente (12) der Halteeinheit (9) mit den blechwerkstückseitigen Halteelement-Enden über die zwischen den Halteelement-Enden und dem Blechwerkstück (5) angeordnete Folie an das Blechwerkstück (5) anlegbar sind,
• **dass** die Tastelement-Enden der Tastelemente (13) der Kontrollvorrichtung (14) der Handhabungsvorrichtung als Tastelementspitzen ausgebildet sind, mittels derer die Folie durchdringbar ist,
• **dass** der oder die Prüf-Kontaktkörper (23, 24) oder die Prüf-Kontaktkörpereinheiten (31, 32) der Prüfvorrichtung (22a, 22b) zur Prüfung der Funktionsfähigkeit der Kontrollvorrichtung (14) der Handhabungsvorrichtung an der dem Tastelement (13) oder den Tastelementen (13) der Kontrollvorrichtung (14) zugeordneten Seite mit einer elektrisch nichtleitenden Prüffolie (25) versehen sind, welche die Beschaffenheit, insbesondere die Festigkeit, der Folie aufweist, mit welcher das Blechwerkstück (5) versehen ist und
• **dass** die Tastelemente (13) in der Prüf-Taststellung mit den Tastelementspitzen gegen den oder die Prüf-Kontaktkörper (23, 24) oder die Prüf-Kontaktkörpereinheiten (31, 32) beaufschlagt sind.

11. Maschinelle Handhabungsvorrichtung nach Anspruch 10, **dadurch gekennzeichnet,**
• **dass** der oder die Prüf-Kontaktkörper (23, 24) oder die Prüf-Kontaktkörpereinheiten (31, 32) der Prüfvorrichtung(22a, 22b) bei aufeinanderfolgenden Prüfungen der Funktionsfähigkeit der Kontrollvorrichtung (14) der Handhabungsvorrichtung an der dem Tastelement (13) oder den Tastelementen (13) der Kontrollvorrichtung (14) zugeordneten Seite mit ein und derselben Prüffolie (25) versehen sind und
• **dass** das Tastelement (13) oder die Tastelemente (13) in der Prüf-Taststellung bei einer auf eine vorausgegangene Prüfung folgenden Prüfung an der Prüffolie (25) gegenüber der Position bei der vorausgegangenen Prüfung versetzt anordenbar sind.

12. Maschinelle Handhabungsvorrichtung nach Anspruch 10 oder Anspruch 11, **dadurch gekennzeichnet, dass** eine Vorrichtung zum Bedecken des oder der Prüf-Kontaktkörper (23, 24) oder der Prüf-Kontaktkörpereinheiten (31, 32) mit der Prüffolie (25) vorgesehen ist, mit einer Prüffolien-Erneuerungsvorrichtung (34), mittels derer eine den oder die Prüf-Kontaktkörper (23, 24) oder die Prüf-Kontaktkörpereinheiten (31, 32) bedeckende Prüffolie (25) nach einer Prüfung der Funktionsfähigkeit der Kontrollvorrichtung (14) als gebrauchte Prüffolie (25) von dem oder den Prüf-Kontaktkörpern (23, 24) oder den Prüf-Kontaktkörpereinheiten (31, 32) entfernbar und durch eine neue Prüffolie (25) ersetzbar ist.

13. Maschinelle Handhabungsvorrichtung nach Anspruch 12, **dadurch gekennzeichnet, dass** mittels der Prüffolien-Erneuerungsvorrichtung (34)
• vor einer Prüfung der Funktionsfähigkeit der Kontrollvorrichtung (14) der Handhabungsvorrichtung eine neue Prüffolie (25) von einer Prüffolien-Vorratsrolle (36) abwickelbar und dem oder den Prüf-Kontaktkörpern (23, 24) oder den Prüf-Kontaktkörpereinheiten (31, 32) zuführbar ist und
• nach einer Prüfung der Funktionsfähigkeit der Kontrollvorrichtung (14) die gebrauchte Prüffolie (25) von dem oder den Prüf-Kontaktkörpern (23, 24) oder den Prüf-Kontaktkörpereinheiten (31, 32) abführbar und durch Abwickeln der neuen Prüffolie (25) von der Prüffolien-Vorratsrolle (36) durch die neue Prüffolie (25) ersetzbar ist.

14. Maschinelle Anordnung für die Blechbearbeitung mit einer Fertigungseinheit (2) zum Trennen eines elektrisch leitfähigen Blechwerkstücks (5) aus einem Blech (4) und/oder zur Bearbeitung eines elektrisch leitfähigen Blechwerkstücks (5) sowie mit einer maschinellen Handhabungsvorrichtung (3) zur Handhabung des elektrisch leitfähigen Blechwerkstücks (5), **dadurch gekennzeichnet, dass** als maschinelle Handhabungsvorrichtung (3) die maschinelle Handhabungsvorrichtung (3) nach einem der vorhergehenden Ansprüche vorgesehen ist.

15. Verfahren zum Handhaben eines elektrisch leitfähigen Blechwerkstücks (5),
• wobei Halteelemente (12) einer Halteeinheit (9) mit blechwerkstückseitigen Halteelement-Enden an ein Blechwerkstück (5) angelegt werden, wobei die blechwerkstückseitigen Halteelement-Enden eine Halteelementebene der Halteeinheit (9) definieren,
• wobei die Halteeinheit (9) mittels einer Bewegungseinheit (8) bewegt wird und
• wobei eine Kontrollvorrichtung (14) verwendet wird, die zwei an der Halteeinheit (9) vorgesehene, parallel zu der Halteelementebene der Halteeinheit (9) gegeneinander versetzte und elektrisch leitfähige Tastelemente (13) sowie eine Kontroll-Auswertevorrichtung (15) umfasst, wobei die Tastelemente (13) der Kontrollvorrichtung (14) ein Tastelementpaar ausbilden und Tastelement-Enden aufweisen, die in einer Kontroll-Taststellung der Tastelemente (13) des Tastelementpaars in der Halteelementebene der Halteeinheit (9) angeordnet werden,
• wobei mittels einer Kontroll-Spannungsquelle (16) der Kontroll-Auswertevorrichtung (15) bei in der Kontroll-Taststellung angeordneten Tastelementen (13) des Tastelementpaars eine Kontrollspannung an die Tastelemente (13) des Tastelementpaars angelegt wird,
• wobei mittels einer Kontroll-Messeinheit (17) der Kontroll-Auswertevorrichtung (15) bei an die Tastelemente (13) des Tastelementpaars angelegter Kontrollspannung ein Ist-Wert eines aufgrund der Kontrollspannung zwischen den Tastelementen (13) des Tastelementpaars fließenden elektrischen Stroms oder einer davon abhängigen elektrischen Größe gemessen wird und
• wobei mittels einer Kontroll-Vergleichseinheit (18) der Kontroll-Auswertevorrichtung (15) der gemessene Ist-Wert mit einem Referenzwert verglichen wird,
**dadurch gekennzeichnet,**
• **dass** die Halteeinheit (9) mittels der Bewegungseinheit (8) der Handhabungsvorrichtung (3) an einer Prüfstation (21) der Handhabungsvorrichtung (3) angeordnet wird und
• **dass** an der Prüfstation (21) die Funktionsfähigkeit der Kontrollvorrichtung (14) der Handhabungsvorrichtung (3) mittels einer Prüfvorrichtung (22a, 22b) geprüft wird,
- indem für jedes der Tastelemente (13) des Tastelementpaars der Kontrollvorrichtung (14) ein elektrisch leitfähiger Prüf-Kontaktkörper (23, 24) der Prüfvorrichtung (22a, 22b) vorgesehen wird,
- indem jedes der Tastelemente (13) des Tastelementpaars in einer Prüf-Taststellung gegenüber dem Prüf-Kontaktkörper (23, 24) angeordnet wird,
- indem mittels einer Prüf-Auswertevorrichtung (26) an das in der Prüf-Taststellung angeordnete Tastelement (13) und den Prüf-Kontaktkörper (23, 24) eine Prüfspannung angelegt wird,
- indem mittels einer Prüf-Messeinheit (29) der Prüf-Auswertevorrichtung (26) bei angelegter Prüfspannung ein Ist-Wert einer kontaktabhängigen elektrischen Größe gemessen wird, deren Wert von dem Zustand eines elektrisch leitenden Kontakts zwischen dem in der Prüf-Taststellung angeordneten Tastelement (13) und dem Prüf-Kontaktkörper (23, 24) abhängig ist und
- indem mittels einer Prüf-Vergleichseinheit (30) der Prüf-Auswertevorrichtung (26) der gemessene Ist-Wert der kontaktabhängigen elektrischen Größe mit einem Referenzwert der kontaktabhängigen elektrischen Größe verglichen wird, welcher das Bestehen eines elektrisch leitenden Kontakts zwischen dem in der Prüf-Taststellung angeordneten Tastelement (13) und dem Prüf-Kontaktkörper (23, 24) indiziert.

## Claims

1. A machine handling device for handling an electrically conductive sheet metal workpiece (5), the machine handling device comprising:
• a holding unit (9) with holding elements (12) that can be placed with holding element ends on a sheet metal workpiece side against a sheet metal workpiece (5), wherein the holding element ends on the sheet metal workpiece side define a holding element plane of the holding unit (9),
• a movement unit (8) for moving the holding unit (9), and
• a control device (14) that comprises two electrically conductive sensing elements (13) provided on the holding unit (9) and offset from one another parallel to the holding element plane of the holding unit (9), and a control evaluation device (15),
- wherein the sensing elements (13) of the control device (14) form a sensing element pair and have sensing element ends that, in a control sensing position of the sensing elements (13) of the sensing element pair, lie in the holding element plane of the holding unit (9),
- wherein the control evaluation device (15) of the control device (14) has a control voltage source (16), a control measuring unit (17) and a control comparison unit (18),
- wherein a control voltage can be applied to the sensing elements (13) of the sensing element pair by means of the control voltage source (16) of the control evaluation device (15) when the sensing elements (13) of the sensing element pair are arranged in the control sensing position,
- wherein an actual value of an electrical current flowing as a result of the control voltage between the sensing elements (13) of the sensing element pair or of an electrical variable dependent thereon can be measured by means of the control measuring unit (17) of the control evaluation device (15) when the control voltage is applied to the sensing elements (13) of the sensing element pair, and
- wherein the measured actual value can be compared with a reference value by means of the control comparison unit (18) of the control evaluation device (15),
**characterized in that**
a test station (21) is provided at which the holding unit (9) of the handling device can be arranged by means of the movement unit (8) of the handling device and at which the functional capability of the control device (14) of the handling device can be tested by means of a test device (22a, 22b), by:
• providing an electrically conductive test contact body (23, 24) of the test device (22a, 22b) for each of the sensing elements (13) of the sensing element pair of the control device,
• allowing each of the sensing elements (13) of the sensing element pair to be arranged in a test sensing position relative to the test contact body (23, 24),
• providing a test evaluation device (26) by means of which a test voltage can be applied to the sensing element (13) arranged in the test sensing position and to the test contact body (23, 24), and
• the test evaluation device (26) having a test measuring unit (29) and a test comparison unit (30), wherein by means of the test measuring unit (29) of the test evaluation device (26), when the test voltage is applied, an actual value of a contact-dependent electrical variable can be measured, the value of which is dependent on the state of an electrically conductive contact between the sensing element (13) arranged in the test sensing position and the test contact body (23, 24), and wherein by means of the test comparison unit (30) of the test evaluation device (26), the measured actual value of the contact-dependent electrical variable can be compared with a reference value of the contact-dependent electrical variable that indicates the existence of an electrically conductive contact between the sensing element (13) arranged in the test sensing position and the test contact body (23, 24).

2. The machine handling device according to claim 1, **characterized in that**
• each of the sensing elements (13) of the sensing element pair of the control device (14) is assigned its own electrically conductive test contact body (23, 24) of the test device (22a, 22b) that is electrically insulated from the test contact body (23, 24) assigned to the respective other sensing element (13),
• the sensing elements (13) of the sensing element pair can be arranged simultaneously in a test sensing position relative to the respectively assigned test contact body (23, 24),
• by means of the test evaluation device (26), a test voltage can be applied to the sensing elements (13) arranged in the test sensing position and the respectively assigned test contact body (23, 24),
• by means of the test measuring unit (29) of the test evaluation device (26), when the test voltage is applied, an actual value of a contact-dependent electrical variable can be measured, the value of which is dependent on the state of an electrically conductive contact between the sensing elements (13) arranged in the test sensing position and the respectively assigned test contact body (23, 24) and
• by means of the test comparison unit (30) of the test evaluation device (26), the measured actual value of the contact-dependent electrical variable is comparable with a reference value of the contact-dependent electrical variable that indicates the existence of an electrically conductive contact between the sensing elements (13) arranged in the test sensing position and the respectively assigned test contact body (23, 24).

3. The machine handling device according to claim 1, **characterized in that**
• each of the sensing elements (13) of the sensing element pair of the control device (14) is a sensing element (13) of a sensing element arrangement (19, 20) with a plurality of sensing elements (13) connected in parallel,
• a control voltage can be applied to the sensing element arrangements (19, 20) by means of the control voltage source (16) of the control evaluation device (15) when the sensing elements (13) are arranged in the control sensing position, and
• the functional capability of the control device (14) of the handling device can be tested at the test station (21) by means of the test device (22a, 22b), by:
- providing an electrically conductive test contact body (23, 24) of the test device (22a, 22b) for each of the sensing element arrangements (19, 20) of the control device (14),
- allowing a test voltage to be applied to the sensing element arrangement (19, 20) and the test contact body (23, 24) by means of the test evaluation device (26) when the sensing elements (13) are arranged in the test sensing position,
- allowing the test measuring unit (29) of the test evaluation device (26), when the test voltage is applied, to be used to measure an actual value of a contact-dependent electrical variable, the value of which is dependent on the state of an electrically conductive contact between the sensing element arrangement (19, 20) and the test contact body (23, 24), and
- allowing the test comparison unit (30) of the test evaluation device (26) to be used to compare the measured actual value of the contact-dependent electrical variable with a reference value of the contact-dependent electrical variable that indicates the existence of an electrically conductive contact between the sensing element arrangement (19, 20) and the test contact body (23, 24).

4. The machine handling device according to claim 3, **characterized in that**
• each of the sensing element arrangements (19, 20) of the control device (14) is assigned its own electrically conductive test contact body (23, 24) of the test device (22a, 22b), which is electrically insulated from the test contact body (23, 24) assigned to the respective other sensing element arrangement (19, 20),
• at least one sensing element (13) of the one sensing element arrangement (19, 20) can be arranged simultaneously with at least one sensing element (13) of the other sensing element arrangement (19, 20) in a test sensing position relative to the respectively assigned test contact body (23, 24),
• a test voltage can be applied to the sensing element arrangements (19, 20) and the respectively assigned test contact body (23, 24) by means of the test evaluation device (26) when the sensing elements (13) are arranged in the test sensing position,
• by means of the test measuring unit (29) of the test evaluation device (26), when the test voltage is applied, an actual value of a contact-dependent electrical variable can be measured, the value of which is dependent on the state of an electrically conductive contact between the sensing element arrangements (19, 20) and the respectively assigned test contact body (23, 24) and
• by means of the test comparison unit (30) of the test evaluation device (26), the measured actual value of the contact-dependent electrical variable is comparable with a reference value of the contact-dependent electrical variable that indicates the existence of an electrically conductive contact between the sensing element arrangements (19, 20) and the respectively assigned test contact body (23, 24).

5. The machine handling device according to claim 3 or claim 4, **characterized in that**
• the test contact body (23, 24) or at least one of the test contact bodies (23, 24) is designed as a test contact body arrangement with test contact body units (31, 32) that are electrically conductive and electrically insulated from one another, of which one test contact body unit (31, 32) is assigned to one of the sensing elements (13) of the sensing element arrangements (19, 20),
• the sensing elements (13) of each of the sensing element arrangements (19, 20) can be arranged simultaneously in a test sensing position relative to the respectively assigned test contact body unit (31, 32),
• a test voltage can be applied individually to each of the sensing elements (13) arranged in the test sensing position and to the assigned test contact body unit (31, 32) by means of the test evaluation device (26),
• by means of the test measuring unit (29) of the test evaluation device (26), when the test voltage is applied, an actual value of a contact-dependent electrical variable can be measured, the value of which is dependent on the state of an electrically conductive contact between the sensing element (13) and the assigned test contact body unit (31, 32), and
• by means of the test comparison unit (30) of the test evaluation device (26), the measured actual value of the contact-dependent electrical variable is comparable with a reference value of the contact-dependent electrical variable that indicates the existence of an electrically conductive contact between the sensing element (13) arranged in the test sensing position and the assigned test contact body unit (31, 32).

6. The machine handling device according to any of the preceding claims, **characterized in that**
• a test voltage can be applied to the sensing element (13) arranged in the test sensing position and to the test contact body (23, 24) by allowing the test contact body (23, 24) to be connected to ground, or
• a test voltage can be applied to the sensing elements (13) arranged in the test sensing position and to the respectively assigned test contact body (23, 24) by allowing the test contact body (23, 24) to be connected to ground, or
• a test voltage can be applied to the sensing element arrangement (19, 20) and the test contact body (23, 24) by allowing the test contact body (23, 24) to be connected to ground, or
• a test voltage can be applied to the sensing element arrangements (19, 20) and the respectively assigned test contact body (23, 24) by allowing the test contact body (23, 24) to be connected to ground, or
• a test voltage can be applied individually to each of the sensing elements (13) arranged in the test sensing position and to the assigned test contact body unit (31, 32) by allowing the test contact body unit (31, 32) to be connected to ground.

7. The machine handling device according to any of the preceding claims, **characterized in that**
• the holding elements (12) of the holding unit (9) can be switched in a controlled manner to a functional state, wherein, by means of the holding elements (12) switched to the functional state, a sheet metal workpiece (5) can be fixed to the holding unit (9) with an extension in the holding element plane, and
• the control device (14) of the handling device can be used to check as the state of the holding unit (9) whether a sheet metal workpiece (5) is fixed to the holding unit (9) by means of the holding elements (12) switched to the functional state, wherein the sensing elements (13) of the sensing element pair can be arranged in the control sensing position when the holding elements (12) of the holding unit (9) have been switched to the functional state.

8. The machine handling device according to any of the preceding claims, **characterized in that** the sensing elements (13) can be arranged in the test sensing position by means of the movement unit (8) of the handling device.

9. The machine handling device according to any of the preceding claims, **characterized in that**, by means of the test measuring unit (29) of the test evaluation device (26), an electrical current and/or an electrical resistance can be measured as the contact-dependent electrical variable.

10. The machine handling device according to any of the preceding claims, **characterized in that**
• the handling device is designed to handle an electrically conductive sheet metal workpiece (5) that is provided with an electrically non-conductive film on a side facing the holding unit (9),
• the holding elements (12) of the holding unit (9) can be placed with the holding element ends on the sheet metal workpiece side onto the sheet metal workpiece (5) via the film arranged between the holding element ends and the sheet metal workpiece (5),
• the sensing element ends of the sensing elements (13) of the control device (14) of the handling device are designed as sensing element tips that can penetrate the film,
• the test contact body or bodies (23, 24) or the test contact body units (31, 32) of the test device (22a, 22b), for testing the functional capability of the control device (14) of the handling device, are provided on the side assigned to the sensing element (13) or the sensing elements (13) of the control device (14) with an electrically non-conductive test film (25) that has the characteristics, in particular the strength, of the film with which the sheet metal workpiece (5) is provided, and
• in the test sensing position, the sensing elements (13) are applied with the sensing element tips against the test contact body or bodies (23, 24) or the test contact body units (31, 32).

11. The machine handling device according to claim 10, **characterized in that**
• the test contact body or bodies (23, 24) or the test contact body units (31, 32) of the test device (22a, 22b) are provided with one and the same test film (25) on the side assigned to the sensing element (13) or the sensing elements (13) of the control device (14) during successive tests of the functional capability of the control device (14) of the handling device, and
• in the test sensing position during a test following a previous test, the sensing element (13) or the sensing elements (13) can be arranged on the test film (25) offset in relation to the position during the previous test.

12. The machine handling device according to claim 10 or claim 11, **characterized in that** a device for covering the test contact body or bodies (23, 24) or the test contact body units (31, 32) with the test film (25) is provided, which device comprises a test film renewal device (34) by means of which a test film (25) covering the test contact body or bodies (23, 24) or the test contact body units (31, 32) can be removed as a used test film (25) from the test contact body or bodies (23, 24) or the test contact body units (31, 32) after a test of the functional capability of the control device (14) and can be replaced by a new test film (25).

13. The machine handling device according to claim 12,
**characterized in that**, by means of the test film renewal device (34),
• before a test of the functional capability of the control device (14) of the handling device, a new test film (25) can be unwound from a test film storage roller (36) and fed to the test contact body or bodies (23, 24) or the test contact body units (31, 32), and
• after a test of the functional capability of the control device (14), the used test film (25) can be removed from the test contact body or bodies (23, 24) or the test contact body units (31, 32) and replaced with the new test film (25) by unwinding the new test film (25) from the test film storage roller (36).

14. A machine arrangement for machining sheet metal, the machine arrangement comprising a fabrication unit (2) for separating an electrically conductive sheet metal workpiece (5) from a metal sheet (4) and/or for machining an electrically conductive sheet metal workpiece (5), and comprising a machine handling device (3) for handling the electrically conductive sheet metal workpiece (5), **characterized in that** the machine handling device (3) according to any of the preceding claims is provided as the machine handling device (3).

15. A method for handling an electrically conductive sheet metal workpiece (5),
• wherein holding elements (12) of a holding unit (9) are placed with holding element ends on a sheet metal workpiece side against a sheet metal workpiece (5), wherein the holding element ends on the sheet metal workpiece side define a holding element plane of the holding unit (9),
• wherein the holding unit (9) is moved by means of a movement unit (8), and
• wherein a control device (14) is used that comprises two electrically conductive sensing elements (13) that are provided on the holding unit (9) and offset from one another parallel to the holding element plane of the holding unit (9), and a control evaluation device (15), wherein the sensing elements (13) of the control device (14) form a sensing element pair and have sensing element ends that are arranged in a control sensing position of the sensing elements (13) of the sensing element pair in the holding element plane of the holding unit (9),
• wherein a control voltage is applied to the sensing elements (13) of the sensing element pair by means of a control voltage source (16) of the control evaluation device (15) when the sensing elements (13) of the sensing element pair are arranged in the control sensing position,
• wherein an actual value of an electrical current flowing as a result of the control voltage between the sensing elements (13) of the sensing element pair or of an electrical variable dependent thereon is measured by means of a control measuring unit (17) of the control evaluation device (15) when the control voltage is applied to the sensing elements (13) of the sensing element pair, and
• wherein the measured actual value is compared with a reference value by means of a control comparison unit (18) of the control evaluation device (15),
**characterized in that**
• the holding unit (9) is arranged at a test station (21) of the handling device (3) by means of the movement unit (8) of the handling device (3), and
• at the test station (21), the functional capability of the control device (14) of the handling device (3) is tested by means of a test device (22a, 22b), by:
- providing an electrically conductive test contact body (23, 24) of the test device (22a, 22b) for each of the sensing elements (13) of the sensing element pair of the control device (14),
- arranging each of the sensing elements (13) of the sensing element pair in a test sensing position relative to the test contact body (23, 24),
- applying a test voltage to the sensing element (13) arranged in the test sensing position and to the test contact body (23, 24) by means of a test evaluation device (26),
- measuring, by means of a test measuring unit (29) of the test evaluation device (26) when the test voltage is applied, an actual value of a contact-dependent electrical variable, the value of which is dependent on the state of an electrically conductive contact between the sensing element (13) arranged in the test sensing position and the test contact body (23, 24), and
- comparing, by means of a test comparison unit (30) of the test evaluation device (26), the measured actual value of the contact-dependent electrical variable with a reference value of the contact-dependent electrical variable that indicates the existence of an electrically conductive contact between the sensing element (13) arranged in the test sensing position and the test contact body (23, 24).

## Revendications

1. Dispositif de manipulation mécanique permettant de manipuler une pièce de tôle (5) électriquement conductrice,
• avec une unité de retenue (9) comprenant des éléments de retenue (12) dont les extrémités d'élément de retenue situées côté pièce de tôle peuvent être appliquées sur une pièce de tôle (5), les extrémités d'élément de retenue situées côté pièce de tôle définissant un plan d'élément de retenue de l'unité de retenue (9),
• avec une unité de déplacement (8) permettant de déplacer l'unité de retenue (9), et
• avec un dispositif de contrôle (14) comprenant deux éléments palpeurs (13) électriquement conducteurs décalés l'un par rapport à l'autre parallèlement au plan d'élément de retenue de l'unité de retenue (9) et fournis au niveau de l'unité de retenue (9), et un dispositif d'évaluation de contrôle (15),
- les éléments palpeurs (13) du dispositif de contrôle (14) formant une paire d'éléments palpeurs et présentant des extrémités d'élément palpeur qui, dans une position de palpage de contrôle des éléments palpeurs (13) de la paire d'éléments palpeurs, se trouvent dans le plan d'élément de retenue de l'unité de retenue (9),
- le dispositif d'évaluation de contrôle (15) du dispositif de contrôle (14) présentant une source de tension de contrôle (16), une unité de mesure de contrôle (17) et une unité de comparaison de contrôle (18),
- une tension de contrôle pouvant être appliquée aux éléments palpeurs (13) de la paire d'éléments palpeurs au moyen de la source de tension de contrôle (16) du dispositif d'évaluation de contrôle (15) lorsque les éléments palpeurs (13) de la paire d'éléments palpeurs sont agencés dans la position de palpage de contrôle,
- une valeur réelle d'un courant électrique, circulant entre les éléments palpeurs (13) de la paire d'éléments palpeurs du fait de la tension de contrôle, ou d'une grandeur électrique dépendante dudit courant peut être mesurée au moyen de l'unité de mesure de contrôle (17) du dispositif d'évaluation de contrôle (15) lorsque la tension de contrôle est appliquée aux éléments palpeurs (13) de la paire d'éléments palpeurs, et
- la valeur réelle mesurée pouvant être comparée à une valeur de référence au moyen de l'unité de comparaison de contrôle (18) du dispositif d'évaluation de contrôle (15),
**caractérisé en ce que**
• un poste de vérification (21) est fourni, au niveau duquel l'unité de retenue (9) du dispositif de manipulation peut être agencée au moyen de l'unité de déplacement (8) du dispositif de manipulation et au niveau duquel la capacité de fonctionnement du dispositif de contrôle (14) du dispositif de manipulation peut être vérifiée au moyen d'un dispositif de vérification (22a, 22b),
• un corps de contact de vérification (23, 24) électriquement conducteur appartenant au dispositif de vérification (22a, 22b) étant fourni pour chacun des éléments palpeurs (13) de la paire d'éléments palpeurs du dispositif de contrôle,
• chacun des éléments palpeurs (13) de la paire d'éléments palpeurs étant agencé dans une position de palpage de vérification par rapport au corps de contact de vérification (23, 24),
• un dispositif d'évaluation de vérification (26) étant fourni, au moyen duquel une tension de vérification peut être appliquée à l'élément palpeur (13) agencé dans la position de palpage de vérification et au corps de contact de vérification (23, 24), et
• le dispositif d'évaluation de vérification (26) présentant une unité de mesure de vérification (29) ainsi qu'une unité de comparaison de vérification (30), une valeur réelle d'une grandeur électrique dépendante du contact pouvant être mesurée au moyen de l'unité de mesure de vérification (29) du dispositif d'évaluation de vérification (26) lorsqu'une tension de vérification est appliquée, ladite valeur dépendant de l'état d'un contact électriquement conducteur entre l'élément palpeur (13) agencé dans la position de palpage de vérification et le corps de contact de vérification (23, 24), et la valeur réelle mesurée de la grandeur électrique dépendante du contact pouvant être comparée au moyen de l'unité de comparaison de vérification (30) du dispositif d'évaluation de vérification (26) à une valeur de référence de la grandeur électrique dépendante du contact indiquant l'existence d'un contact électriquement conducteur entre l'élément palpeur (13) agencé dans la position de palpage de vérification et le corps de contact de vérification (23, 24).

2. Dispositif de manipulation mécanique selon la revendication 1, **caractérisé en ce que**
à chacun des éléments palpeurs (13) de la paire d'éléments palpeurs du dispositif de contrôle (14) est associé un corps de contact de vérification (23, 24) électriquement conducteur particulier du dispositif de vérification (22a, 22b), qui est isolé électriquement par rapport au corps de contact de vérification (23, 24) associé à respectivement l'autre élément palpeur (13),
• les éléments palpeurs (13) de la paire d'éléments palpeurs peuvent être agencés simultanément dans une position de palpage de vérification par rapport au corps de contact de vérification (23, 24) respectivement associé,
• une tension de vérification peut être appliquée au moyen du dispositif d'évaluation de vérification (26) aux éléments palpeurs (13) agencés dans la position de palpage de vérification et au corps de contact de vérification (23, 24) respectivement associés,
• une valeur réelle d'une grandeur électrique dépendante du contact, dont la valeur dépend de l'état d'un contact électriquement conducteur entre les éléments palpeurs (13) agencés dans la position de palpage de vérification et le corps de contact de vérification (23, 24) respectivement associé, peut être mesurée au moyen de l'unité de mesure de vérification (29) du dispositif d'évaluation de vérification (26) lorsqu'une tension de vérification est appliquée, et
• la valeur réelle mesurée de la grandeur électrique dépendante du contact peut être comparée au moyen de l'unité de comparaison de vérification (30) du dispositif d'évaluation de vérification (26) à une valeur de référence de la grandeur électrique dépendante du contact indiquant l'existence d'un contact électriquement conducteur entre les éléments palpeurs (13) agencés dans la position de palpage de vérification et le corps de contact de vérification (23, 24) respectivement associé.

3. Dispositif de manutention mécanique selon la revendication 1, **caractérisé en ce que**
• chacun des éléments palpeurs (13) de la paire d'éléments palpeurs du dispositif de contrôle (14) est un élément palpeur (13) d'un ensemble d'éléments palpeurs (19, 20) comprenant une pluralité d'éléments palpeurs (13) connectés en parallèle,
• une tension de contrôle peut être appliquée au moyen de la source de tension de contrôle (16) du dispositif d'évaluation de contrôle (15) aux ensembles d'éléments palpeurs (19, 20) lorsque les éléments palpeurs (13) sont agencés dans la position de palpage de contrôle et
• la capacité de fonctionnement du dispositif de contrôle (14) du dispositif de manipulation peut être vérifiée au niveau du poste de vérification (21) au moyen du dispositif de vérification (22a, 22b),
- un corps de contact de vérification (23, 24) électriquement conducteur du dispositif de vérification (22a, 22b) étant fourni pour chacun des ensembles d'éléments palpeurs (19, 20) du dispositif de contrôle (14),
- une tension de vérification pouvant être appliquée à l'ensemble d'éléments palpeurs (19, 20) et au corps de contact de vérification (23, 24) au moyen du dispositif d'évaluation de vérification (26) lorsque les éléments palpeurs (13) sont agencés dans la position de palpage de vérification,
- une valeur réelle d'une grandeur électrique dépendante du contact, dont la valeur dépend de l'état d'un contact électriquement conducteur entre l'ensemble d'éléments palpeurs (19, 20) et le corps de contact de vérification (23, 24), pouvant être mesurée au moyen de l'unité de mesure de vérification (29) du dispositif d'évaluation de vérification (26) lorsqu'une tension de vérification est appliquée, et
- la valeur réelle mesurée de la grandeur électrique dépendante du contact pouvant être comparée au moyen de l'unité de comparaison de vérification (30) du dispositif d'évaluation de vérification (26) à une valeur de référence de la grandeur électrique dépendante du contact indiquant l'existence d'un contact électriquement conducteur entre l'ensemble d'éléments palpeurs (19, 20) et le corps de contact de vérification (23, 24).

4. Dispositif de manipulation mécanique selon la revendication 3, **caractérisé en ce que**
• à chacun des ensembles d'éléments palpeurs (19, 20) du dispositif de contrôle (14) est associé un corps de contact de vérification (23, 24) électriquement conducteur particulier du dispositif de vérification (22a, 22b) qui est isolé électriquement par rapport au corps de contact de vérification (23, 24) associé à respectivement l'autre ensemble d'éléments palpeurs (19, 20),
• au moins un élément palpeur (13) de l'un des enembles d'éléments palpeurs (19, 20) peut être agencé simultanément avec au moins un élément palpeur (13) de l'autre agencement d'éléments palpeurs (19, 20) dans une position de palpage de vérification par rapport au corps de contact de vérification (23, 24) respectivement associé,
• une tension de vérification peut être appliquée aux ensembles d'éléments palpeurs (19, 20) et au corps de contact de vérification (23, 24) respectivement associé au moyen du dispositif d'évaluation de vérification (26) lorsque les éléments palpeurs (13) sont agencés dans la position de palpage de vérification,
• une valeur réelle d'une grandeur électrique dépendante du contact, dont la valeur dépend de l'état d'un contact électriquement conducteur entre les ensembles d'éléments palpeurs (19, 20) et le corps de contact de vérification (23, 24) respectivement associé, peut être mesurée au moyen de l'unité de mesure de vérification (29) du dispositif d'évaluation de vérification (26) lorsque la tension de vérification est appliquée, et
• la valeur réelle mesurée de la grandeur électrique dépendante du contact peut être comparée au moyen de l'unité de comparaison de vérification (30) du dispositif d'évaluation de vérification (26) à une valeur de référence de la grandeur électrique dépendante du contact indiquant l'existence d'un contact électriquement conducteur entre les ensembles d'éléments palpeurs (19, 20) et le corps de contact de vérification (23, 24) respectivement associé.

5. Dispositif de manipulation mécanique selon la revendication 3 ou la revendication 4, **caractérisé en ce que**
• le corps de contact de vérification (23, 24) ou au moins un des corps de contact de vérification (23, 24) est réalisé sous la forme d'un ensemble de corps de contact de vérification comprenant des unités de corps de contact de vérification (31, 32) électriquement conductrices et électriquement isolées les unes par rapport aux autres, parmi lesquelles respectivement une unité de corps de contact de vérification (31, 32) est associée à un des éléments palpeurs (13) des ensembles d'éléments palpeurs (19, 20),
• les éléments palpeurs (13) de chacun des ensembles d'éléments palpeurs (19, 20) peuvent être agencés simultanément dans une position de palpage de vérification par rapport à l'unité de corps de contact de vérification (31, 32) respectivement associée,
• une tension de vérification peut être appliquée de manière individuelle au moyen du dispositif d'évaluation de vérification (26) à chacun des éléments palpeurs (13) agencés dans la position de palpage de vérification et à l'unité de corps de contact de vérification (31, 32) associée,
• une valeur réelle d'une grandeur électrique dépendante du contact, dont la valeur dépend de l'état d'un contact électriquement conducteur entre l'élément palpeur (13) et l'unité de corps de contact de vérification (31, 32) associée, peut être mesurée au moyen de l'unité de mesure de vérification (29) du dispositif d'évaluation de vérification (26) lorsqu'une tension de vérification est appliquée, et
• la valeur réelle mesurée de la grandeur électrique dépendante du contact peut être comparée au moyen de l'unité de comparaison de vérification (30) du dispositif d'évaluation de vérification (26) à une valeur de référence de la grandeur électrique dépendante du contact indiquant l'existence d'un contact électriquement conducteur entre l'élément palpeur (13) agencé dans la position de palpage de vérification et l'unité de corps de contact de vérification (31, 32) associée.

6. Dispositif de manipulation mécanique (20) selon l'une quelconque des revendications précédentes, **caractérisé en ce que** :
• une tension de vérification peut être appliquée à l'élément palpeur (13) agencé dans la position de palpage de vérification et au corps de contact de vérification (23, 24) en connectant le corps de contact de vérification (23, 24) à la masse ou
• une tension de vérification peut être appliquée aux éléments palpeurs (13) agencés dans la position de palpage de vérification et au corps de contact de vérification (23, 24) respectivement associé en connectant le corps de contact de vérification (23, 24) à la masse ou
• une tension de vérification peut être appliquée à l'ensemble d'éléments palpeurs (19, 20) et au corps de contact de vérification (23, 24) en connectant le corps de contact de vérification (23, 24) à la masse ou
• une tension de vérification peut être appliquée aux ensembles d'éléments palpeurs (19, 20) et au corps de contact de vérification (23, 24) respectivement associé en connectant le corps de contact de vérification (23, 24) à la masse ou
• une tension de vérification peut être appliquée de manière individuelle à chacun des éléments palpeurs (13) agencés dans la position de palpage de vérification et à l'unité de corps de contact de vérification (31, 32) associée en connectant l'unité de corps de contact de vérification (31, 32) à la masse.

7. Dispositif de manipulation mécanique (20) selon l'une quelconque des revendications précédentes, **caractérisé en ce que** :
• les éléments de retenue (12) de l'unité de retenue (9) peuvent être commutés dans un état fonctionnel de manière commandée, une pièce de tôle (5) pouvant être fixée à l'unité de retenue (9) avec une extension dans le plan d'élément de retenue au moyen des éléments de retenue (12) commutés dans l'état fonctionnel, et
• au moyen du dispositif de contrôle (14) du dispositif de manipulation, il est possible de contrôler, sous la forme d'un état de l'unité de retenue (9), si une pièce de tôle (5) est fixée à l'unité de retenue (9) au moyen des éléments de retenue (12) commutés dans l'état fonctionnel, les éléments palpeurs (13) de la paire d'éléments palpeurs pouvant être agencés dans la position de palpage de contrôle lorsque les éléments de retenue (12) de l'unité de retenue (9) sont commutés dans l'état fonctionnel.

8. Dispositif de manipulation mécanique selon l'une quelconque des revendications précédentes, **caractérisé en ce que** les éléments palpeurs (13) peuvent être agencés dans la position de palpage de vérification au moyen de l'unité de déplacement (8) du dispositif de manipulation.

9. Dispositif de manipulation mécanique selon l'une quelconque des revendications précédentes, **caractérisé en ce qu'**un courant électrique et/ou une résistance électrique peu(ven)t être mesuré(s) en tant que grandeur électrique dépendante du contact au moyen de l'unité de mesure de vérification (29) du dispositif d'évaluation de vérification (26).

10. Dispositif de manipulation mécanique (20) selon l'une quelconque des revendications précédentes, **caractérisé en ce que** :
• le dispositif de manipulation est conçu pour manipuler une pièce de tôle (5) électriquement conductrice munie d'un film électriquement non conducteur au niveau du côté tourné vers l'unité de retenue (9),
• les extrémités d'élément de retenue, situées côté pièce de tôle, des éléments de retenue (12) de l'unité de retenue (9) peuvent être appliquées au niveau de la pièce de tôle (5) par-dessus le film agencé entre les extrémités d'élément de retenue et la pièce de tôle (5),
• les extrémités d'élément palpeur des éléments palpeurs (13) du dispositif de contrôle (14) du dispositif de manipulation sont réalisées sous la forme de pointes d'éléments palpeurs au moyen desquelles le film peut être transpercé,
• du côté associé à l'élément palpeur (13) ou aux éléments palpeurs (13) du dispositif de contrôle (14), le ou les corps de contact de vérification (23, 24) ou les unités de corps de contact de vérification (31, 32) du dispositif de vérification (22a, 22b) est/sont muni(e)s, afin de vérifier la capacité de fonctionnement du dispositif de contrôle (14) du dispositif de manipulation, d'un film de vérification (25) électriquement non conducteur présentant la spécificité, en particulier la résistance, du film dont est munie la pièce de tôle (5), et
• les éléments palpeurs (13) dans la position de palpage de vérification sont sollicités par les pointes d'élément palpeur à l'encontre du ou des corps de contact de vérification (23, 24) ou des unités de corps de contact de vérification (31, 32).

11. Dispositif de manipulation mécanique selon la revendication 10, **caractérisé en ce que**
• le ou les corps de contact de vérification (23, 24) ou les unités de corps de contact de vérification (31, 32) du dispositif de vérification(22a, 22b) est/sont muni(e)s d'un seul et même film de vérification (25) au niveau du côté associé à l'élément palpeur (13) ou aux éléments palpeurs (13) du dispositif de contrôle (14) lors de vérifications successives de la capacité de fonctionnement du dispositif de contrôle (14) du dispositif de manipulation, et
• lors d'une vérification succédant à une vérification précédente, l'élément palpeur (13) ou les éléments palpeurs (13) dans la position de palpage de vérification peu(ven)t être agencé(s) sur le film de vérification (25) de manière décalée par rapport à la position prise lors de la vérification précédente.

12. Dispositif de manipulation mécanique selon la revendication 10 ou la revendication 11, **caractérisé en ce qu'**un dispositif permettant de recouvrir le ou les corps de contact de vérification (23, 24) ou les unités de corps de contact de vérification (31, 32) avec le film de vérification (25) est fourni, avec un dispositif de renouvellement de film de vérification (34) au moyen duquel un film de vérification (25) recouvrant le ou les corps de contact de vérification (23, 24) ou les unités de corps de contact de vérification (31, 32) peut être retiré, en tant que film de vérification (25) usagé, du ou des corps de contact de vérification (23, 24) ou des unités de corps de contact de vérification (31, 32) après une vérification de la capacité de fonctionnement du dispositif de contrôle (14) et être remplacé par un nouveau film de vérification (25).

13. Dispositif de manipulation mécanique selon la revendication 12, **caractérisé en ce que**, au moyen du dispositif de renouvellement de film de vérification (34),
• avant une vérification de la capacité de fonctionnement du dispositif de contrôle (14) du dispositif de manipulation, un nouveau film de vérification (25) peut être déroulé à partir d'un rouleau de réserve de film de vérification (36) et être acheminé vers le ou les corps de contact de vérification (23, 24) ou les unités de corps de contact de vérification (31, 32), et
• après une vérification de la capacité de fonctionnement du dispositif de contrôle (14), le film de vérification (25) usagé peut être retiré du ou des corps de contact de vérification (23, 24) ou des unités de corps de contact de vérification (31, 32) et être remplacé par le nouveau film de vérification (25) grâce au déroulage du nouveau film de vérification (25) à partir du rouleau de réserve de film de vérification (36).

14. Agencement mécanique destiné au traitement de tôles, comprenant une unité de production (2) permettant de séparer une pièce de tôle (5) électriquement conductrice à partir d'une tôle (4) et/ou permettant de traiter une pièce de tôle (5) électriquement conductrice, et comprenant un dispositif de manipulation mécanique (3) permettant de manipuler la pièce de tôle (5) électriquement conductrice, **caractérisé en ce que** le dispositif de manipulation mécanique (3) fourni est le dispositif de manipulation mécanique (3) selon l'une quelconque des revendications précédentes.

15. Procédé de manipulation d'une pièce de tôle (5) électriquement conductrice,
• les éléments de retenue (12) d'une unité de retenue (9) munis d'extrémités d'élément de retenue situés côté pièce de tôle étant appliqués sur une pièce de tôle (5), les extrémités d'élément de retenue situés côté pièce de tôle définissant un plan d'élément de retenue de l'unité de retenue (9),
• l'unité de retenue (9) étant déplacée au moyen d'une unité de déplacement (8) et
• un dispositif de contrôle (14) étant utilisé, qui comprend deux éléments palpeurs (13) électriquement conducteurs décalés l'un par rapport à l'autre parallèlement au plan des éléments de retenue de l'unité de retenue (9) et fournis au niveau de l'unité de retenue (9), ainsi qu'un dispositif d'évaluation de contrôle (15), les éléments palpeurs (13) du dispositif de contrôle (14) formant une paire d'éléments palpeurs et présentant des extrémités d'éléments palpeurs qui sont agencées dans le plan d'élément de retenue de l'unité de retenue (9) dans une position de palpage de contrôle des éléments palpeurs (13) de la paire d'éléments palpeurs,
• une tension de contrôle étant appliquée aux éléments palpeurs (13) de la paire d'éléments palpeurs au moyen de la source de tension de contrôle (16) du dispositif d'évaluation de contrôle (15) lorsque les éléments palpeurs (13) de la paire d'éléments palpeurs sont agencés dans la position de palpage de contrôle,
• une valeur réelle d'un courant électrique, circulant entre les éléments palpeurs (13) de la paire d'éléments palpeurs du fait de la tension de contrôle, ou d'une grandeur électrique dépendante dudit courant pouvant être mesurée au moyen d'une unité de mesure de contrôle (17) du dispositif d'évaluation de contrôle (15) lorsque la tension de contrôle est appliquée aux éléments palpeurs (13) de la paire d'éléments palpeurs et
• la valeur réelle mesurée étant comparée à une valeur de référence au moyen d'une unité de comparaison de contrôle (18) du dispositif d'évaluation de contrôle (15),
**caractérisé en ce que**
• l'unité de retenue (9) est agencée au niveau d'un poste de vérification (21) du dispositif de manipulation (3) au moyen de l'unité de déplacement (8) du dispositif de manipulation (3), et
• la capacité de fonctionnement du dispositif de contrôle (14) du dispositif de manipulation (3) est vérifiée au niveau du poste de vérification (21) au moyen d'un dispositif de vérification (22a, 22b),
- un corps de contact de vérification (23, 24) électriquement conducteur appartenant au dispositif de vérification (22a, 22b) étant fourni pour chacun des éléments palpeurs (13) de la paire d'éléments palpeurs du dispositif de contrôle,
- chacun des éléments palpeurs (13) de la paire d'éléments palpeurs étant agencé dans une position de palpage de vérification par rapport au corps de contact de vérification (23, 24),
- une tension de vérification étant appliquée à l'élément palpeur (13) agencé dans la position de palpage de vérification et au corps de contact de vérification (23, 24) au moyen d'un dispositif d'évaluation de vérification (26),
- une valeur réelle d'une grandeur électrique dépendante du contact, dont la valeur dépend de l'état d'un contact électriquement conducteur entre l'élément palpeur (13) agencé dans la position de palpage de vérification et le corps de contact de vérification (23, 24), étant mesurée au moyen d'une unité de mesure de vérification (29) du dispositif d'évaluation de vérification (26) lorsqu'une tension de vérification est appliquée, et
- la valeur réelle mesurée de la grandeur électrique dépendante du contact étant comparée au moyen d'une unité de comparaison de vérification (30) du dispositif d'évaluation de vérification (26) à une valeur de référence de la grandeur électrique dépendante du contact indiquant l'existence d'un contact électriquement conducteur entre l'élément palpeur (13) agencé dans la position de palpage de vérification et le corps de contact de vérification (23, 24).
